# EUROPEAN PATENT APPLICATION

(11) **EP 4 808 187 A1**
(43) Date of publication of application: **16.09.2026**
(21) Application number: 24902756.6
(22) Date of filing: 09.12.2024
(51) Int. Cl.: H04W 16/28

(54) **BEAM SCANNING METHOD AND APPARATUS, AND TERMINAL**

(30) Priority: 15.12.2023 CN 202311734520
(71) Applicant: CICT Connected and Intelligent Technologies Co., Ltd., Chongqing 400041 (CN)
(72) Inventor: LIU, Yanqiang, Chongqing 400041 (CN); ZHAO, Rui, Chongqing 400041 (CN); XI, Yifan, Chongqing 400041 (CN); ZHENG, Shilei, Chongqing 400041 (CN)
(74) Representative: Dehns Germany Partnerschaft mbB
(86) International application number: PCT/CN2024/137770
(87) International publication number: WO 2025/124335

(57) **Abstract**

The present application provides a method and apparatus for beam sweeping, and terminals. The method is applied to a first terminal, including: selecting a target beam sweeping resource group from a first resource pool according to configured or pre-configured information, where the number of beam sweeping resources included in the target beam sweeping resource group is related to M and N, M is the configured or pre-configured number of transmitting beam directions, and N is the configured or pre-configured number of receiving beam directions; and sending a beam sweeping channel on the target beam sweeping resource group.

## Description

### Cross-Reference to Related Application

The present application claims priority to Chinese Patent Application No.202311734520.0 filed in China on December 15, 2023, the entire content of which is incorporated herein by reference.

### Technical Field

The present application relates to the field of communication technology, and in particular, to a method and apparatus for beam sweeping, and terminals.

### Background

At present, the deployment of cellular vehicle-to-everything (C-V2X) is mainly at sub-6GHz frequency band (frequency range 1, FR1). However, with the development of C-V2X, the sub-6G frequency band cannot meet the future requirements of V2X for ultra-large throughput, ultra-high latency, and ultra-high reliability. The millimeter-wave frequency band (frequency range 2, FR2) ranging from 30 GHz to 300 GHz can provide more larger bandwidth and improve system performance, which has great application potential for V2X.

The related art does not support the millimeter-wave communication technology of sidelink (SL). If the millimeter-wave communication technology is introduced into the sidelink, in order to ensure the communication efficiency, data needs to be transmitted through directional beams. Therefore, a beam management mechanism of the sidelink needs to be introduced according to specific characteristics and features of the sidelink technology.

### Summary

The present application provides a method and apparatus for beam sweeping, and terminals, solving a problem in the related art that a sidelink does not support a millimeter-wave communication technology.

In a first aspect, embodiments of the present application provide a method for beam sweeping, applied to a first terminal, including:
selecting a target beam sweeping resource group from a first resource pool according to configured or pre-configured information, where the number of beam sweeping resources included in the target beam sweeping resource group is related to M and N, M is the configured or pre-configured number of transmitting beam directions, and N is the configured or pre-configured number of receiving beam directions; and
sending a beam sweeping channel on the target beam sweeping resource group.

In a second aspect, embodiments of the present application provide a method for beam sweeping, applied to a second terminal, including:
determining a type of a beam sweeping resource group from a first resource pool according to configured or pre-configured information, where the number of beam sweeping resources included in the beam sweeping resource group is related to M and N, M is the configured or pre-configured number of transmitting beam directions, and N is the configured or pre-configured number of receiving beam directions; and
receiving a beam sweeping channel sent by a first terminal according to the type of the beam sweeping resource group.

In a third aspect, embodiments of the present application provide a first terminal, including a transceiver, a memory, a processor, and a computer program stored on the memory and runnable on the processor. The processor, when executing the computer program, implements the steps of the method for beam sweeping in the first aspect.

In a fourth aspect, embodiments of the present application provide a second terminal, including a transceiver, a memory, a processor, and a computer program stored on the memory and runnable on the processor. The processor, when executing the computer program, implements the steps of the method for beam sweeping in the second aspect.

In a fifth aspect, embodiments of the present application provide an apparatus for beam sweeping, applied to a first terminal, including:
a resource selection component, configured to select a target beam sweeping resource group from a first resource pool according to configured or pre-configured information, where the number of beam sweeping resources included in the target beam sweeping resource group is related to M and N, M is the configured or pre-configured number of transmitting beam directions, and N is the configured or pre-configured number of receiving beam directions; and
a first sending component, configured to send a beam sweeping channel on the target beam sweeping resource group.

In a sixth aspect, embodiments of the present application provide an apparatus for beam sweeping, applied to a second terminal, including:
a first determination component, configured to determine a type of a beam sweeping resource group from a first resource pool according to configured or pre-configured information, where the number of beam sweeping resources included in the beam sweeping resource group is related to M and N, M is the configured or pre-configured number of transmitting beam directions, and N is the configured or pre-configured number of receiving beam directions; and
a second receiving component, configured to receive a beam sweeping channel sent by a first terminal according to the type of the beam sweeping resource group.

In a seventh aspect, embodiments of the present application provide a computer-readable storage medium, having a computer program stored therein. The computer program, when executed by a processor, causes the steps of the method for beam sweeping in the first aspect or the second aspect to be implemented.

The above-mentioned technical solutions of the present application have the beneficial effects:
In the above-mentioned solutions, the first terminal selects the target beam sweeping resource group from the first resource pool according to the configured or pre-configured information, where the number of the beam sweeping resources included in the target beam sweeping resource group is related to M and N, M is the configured or pre-configured number of the transmitting beam directions, and N is the configured or pre-configured number of the receiving beam directions; and the first terminal sends the beam sweeping channel on the target beam sweeping resource group. According to the solutions of the present application, a novel beam sweeping solution is provided for the millimeter-wave communication of the sidelink, which can support beam pairing for the terminals in millimeter-wave frequency bands.

### Brief Description of the Drawings

Fig. 1 is a first flowchart of a method for beam sweeping according to some embodiments of the present application;
Fig. 2 is a first structural diagram of a beam sweeping channel according to some embodiments of the present application;
Fig. 3 is a second structural diagram of a beam sweeping channel according to some embodiments of the present application;
Fig. 4 is a third structural diagram of a beam sweeping channel according to some embodiments of the present application;
Fig. 5 is a fourth structural diagram of a beam sweeping channel according to some embodiments of the present application;
Fig. 6 is a fifth structural diagram of a beam sweeping channel according to some embodiments of the present application;
Fig. 7 is a sixth structural diagram of a beam sweeping channel according to some embodiments of the present application;
Fig. 8 is a seventh structural diagram of a beam sweeping channel according to some embodiments of the present application;
Fig. 9 is an eighth structural diagram of a beam sweeping channel according to some embodiments of the present application;
Fig. 10 is a first schematic diagram of distribution of beam sweeping resource groups according to some embodiments of the present application;
Fig. 11 is a second schematic diagram of distribution of beam sweeping resource groups according to some embodiments of the present application;
Fig. 12 is a third schematic diagram of distribution of beam sweeping resource groups according to some embodiments of the present application;
Fig. 13 is a first schematic diagram of a method for beam sweeping according to some embodiments of the present application;
Fig. 14 is a second schematic diagram of a method for beam sweeping according to some embodiments of the present application;
Fig. 15 is a third schematic diagram of a method for beam sweeping according to some embodiments of the present application;
Fig. 16 is a fourth schematic diagram of a method for beam sweeping according to some embodiments of the present application;
Fig. 17 is a fifth schematic diagram of a method for beam sweeping according to some embodiments of the present application;
Fig. 18 is a sixth schematic diagram of a method for beam sweeping according to some embodiments of the present application;
Fig. 19 is a seventh schematic diagram of a method for beam sweeping according to some embodiments of the present application;
Fig. 20 is an eighth schematic diagram of a method for beam sweeping according to some embodiments of the present application;
Fig. 21 is a first schematic diagram of time-domain configuration of PSFCH resources according to some embodiments of the present application;
Fig. 22 is a second schematic diagram of time-domain configuration of PSFCH resources according to some embodiments of the present application;
Fig. 23 is a third schematic diagram of time-domain configuration of PSFCH resources according to some embodiments of the present application;
Fig. 24 is a fourth schematic diagram of time-domain configuration of PSFCH resources according to some embodiments of the present application;
Fig. 25 is a fifth schematic diagram of time-domain configuration of PSFCH resources according to some embodiments of the present application;
Fig. 26 is a sixth schematic diagram of time-domain configuration of PSFCH resources according to some embodiments of the present application;
Fig. 27 is a seventh schematic diagram of time-domain configuration of PSFCH resources according to some embodiments of the present application;
Fig. 28 is an eighth schematic diagram of time-domain configuration of PSFCH resources according to some embodiments of the present application;
Fig. 29 is a ninth schematic diagram of time-domain configuration of PSFCH resources according to some embodiments of the present application;
Fig. 30 is a schematic diagram of beam sweeping resource exclusion according to some embodiments of the present application;
Fig. 31 is a second flowchart of a method for beam sweeping according to some embodiments of the present application;
Fig. 32 is a first structural diagram of an apparatus for beam sweeping according to some embodiments of the present application;
Fig. 33 is a second structural diagram of an apparatus for beam sweeping according to some embodiments of the present application;
Fig. 34 is a schematic diagram of a hardware structure of a first terminal according to some embodiments of the present application; and
Fig. 35 is a schematic diagram of a hardware structure of a second terminal according to some embodiments of the present application.

### Detailed Description of the Embodiments

To make technical problems to be solved, technical solutions, and advantages of the present application clearer, a detailed description will be provided below in conjunction with accompanying drawings and specific embodiments. In the following descriptions, specific configurations, particular component details, and the like are provided solely to assist in a comprehensive understanding of the embodiments of the present application. Therefore, those skilled in the art should realize that various changes and modifications may be made to the embodiments described herein without departing from the scope and spirit of the present application. Additionally, for clarity and conciseness, descriptions of known functions and structures are omitted.

It should be understood that throughout the specification, references to "an embodiment" or "one embodiment" imply that specific features, structures, or characteristics associated with the embodiment are included in at least one embodiment of the present application. Therefore, the appearance of "in an embodiment" or "in one embodiment" throughout the specification does not necessarily refer to the same embodiment. Further, these specific features, structures, or characteristics may be combined in one or more embodiments in any suitable manner.

In various embodiments of the present application, it should be understood that the size of the sequence numbers of the following processes does not mean an execution sequence, and the execution sequence of the various processes should be determined according to functions and internal logics, and should not limit an implementation process of the embodiments of the present application.

In addition, the terms "system" and "network" are often used interchangeably herein.

In the embodiments provided in the present application, it should be understood that "B corresponding to A" indicates that B is associated with A, and B may be determined according to A. It should also be understood that determining B according to A does not imply that B is determined solely according to A, and may also be determined according to A and/or other information.

Hereinafter, an initial beam pairing process in new radio (NR) Uu is described.

In a process of cell search and initial random access, user equipment (UE) needs to perform downlink synchronization with a base station and receive system messages, and the base station uses a beam sweeping technology to sweep at a fixed period, and sends a synchronization signal and PBCH block (SSB). The UE communicating with the base station receives the SSB on a corresponding beam to achieve the downlink synchronization and system messages, and sends and receives random access messages in the same beam direction. In addition to broadcast and access information, information such as system messages and paging is also sent by beam sweeping.

The initial beam pairing in the NR Uu is based on SSB transmission and associated physical random access channel (PRACH) reports, the SSB is transmitted in different beam directions, and the UE detects the SSB, measures the signal quality, and reports a measurement result and an SSB resource index to the base station through an associated PRACH. A pairing rule of the SSB resource index (SSB index) and a PRACH resource is predefined.

However, a long term evolution sidelink (LTE SL) /new radio sidelink (NR SL) in the V2X communication technology in the related art are in omnidirectional communication. Nevertheless, communication in an FR2 frequency band requires beamforming, necessitating the design of solutions to implement beam management in sidelink communication. Due to distributed communication characteristics of the SL and differences of reference signal structures, the beam management technology in the Uu of the related art is not applicable, and accordingly, the beam management mechanism in SL communication needs to be designed to ensure that sidelink devices may communicate through beams in the FR2.

Specifically, embodiments of the present application provide a method and apparatus for beam sweeping, and terminals, solving a problem in the related art that a sidelink does not support the millimeter-wave communication technology.

### Embodiment I

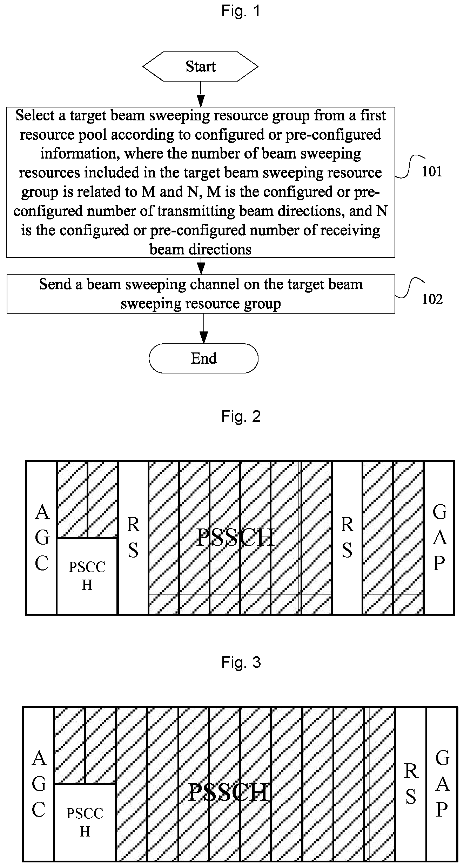

As shown in Fig. 1, embodiments of the present application provide a method for beam sweeping, applied to a first terminal, specifically including the following steps:
Step 101: Select a target beam sweeping resource group from a first resource pool according to configured or pre-configured information, where the number of beam sweeping resources included in the target beam sweeping resource group is related to M and N, M is the configured or pre-configured number of transmitting beam directions, and N is the configured or pre-configured number of receiving beam directions.

In some embodiments of the present application, the configured or pre-configured information includes at least one of the following:
time-domain configuration information of the beam sweeping resources;
frequency-domain configuration information of the beam sweeping resources;
a reservation period of the beam sweeping resources;
sequence identifier (ID) information and sequence type information of a reference signal of a beam sweeping channel;
the number M of transmitting beam directions;
the number N of receiving beam directions;
a beam sweeping resource group ID set;
a time-domain offset value of the beam sweeping resource group;
a beam sweeping method indication;
a beam switching capability indication;
a configuration period of a physical sidelink feedback channel (PSFCH);
a configured offset value of the PSFCH;
frequency-domain configuration information of the first resource pool; or
time-domain configuration information of the first resource pool.

In some embodiments of the present application, the time-domain configuration information of the beam sweeping resources includes: time-domain pattern information of the reference signal, or time-domain pattern information of a physical sidelink control channel, or time-domain pattern information of a physical sidelink shared channel, where the time-domain pattern information includes at least one of the following: time-domain starting symbol position information, time-domain symbol number information, or pattern information of a time-domain symbol position occupied by the reference signal supported by the resource pool.

In some embodiments of the present application, the frequency-domain configuration information of the beam sweeping resources includes: frequency-domain pattern information of the reference signal, frequency-domain pattern information of the physical sidelink control channel, or frequency-domain pattern information of the physical sidelink shared channel, where the frequency-domain pattern information includes at least one of the following: a starting resource element (RE), a comb size, comb offset, cyclic shift, or orthogonal cover code (OCC), a frequency-domain starting physical resource block (PRB) position, subchannel position information, the number of frequency-domain occupied PRBs, the number of frequency-domain occupied subchannels, or frequency-domain shift information (i.e., the number of PRBs offset relative to a frequency-domain reference point).

It should be noted that the configuration about the beam sweeping resources in the configured or pre-configured information refers to the configuration of the beam sweeping resources in the first resource pool.

It should be understood that the first resource pool includes a plurality of beam sweeping resource groups, and the target beam sweeping resource group is at least one of the plurality of beam sweeping resource groups.

The reference signal may be generated according to configured or pre-configured sequence ID information and sequence type information, or may also be generated according to information carried in the physical sidelink control channel.

Step 102: Send a beam sweeping channel on the target beam sweeping resource group.

In the above-mentioned embodiments, since the number of the beam sweeping resources included in the target beam sweeping resource group is related to M and N, M is the configured or pre-configured number of the transmitting beam directions, and N is the configured or pre-configured number of the receiving beam directions, by sending the beam sweeping channel on the target beam sweeping resource group, beam sweeping can be implemented at a receiving terminal or a sending terminal, and through the beam sweeping, beam pairing for the terminals in a millimeter-wave frequency band can be supported, and data transmission is performed using directional beams, which is applicable to the millimeter-wave communication technology for the sidelink.

In some embodiments, the beam sweeping channel includes:
a physical sidelink control channel and a reference signal; or
a physical sidelink control channel, a reference signal, and a physical sidelink shared channel.

In some embodiments of the present application, when the beam sweeping channel includes a physical sidelink control channel (PSCCH), the reference signal (RS), and the physical sidelink shared channel (PSSCH), the PSCCH, the RS, and the PSSCH in a single slot in the time domain are all sent in the same beam direction, and in this case, one beam sweeping resource corresponds to a single slot in the time domain or only one beam sweeping resource exists in a single slot. For example, please refer to Fig. 2 and Fig. 3. A multiplexing method for the PSCCH and the RS is time division multiplexing (TDM), and the beam sweeping channel in a frequency domain occupies L subchannels or L resource blocks (PRBs).

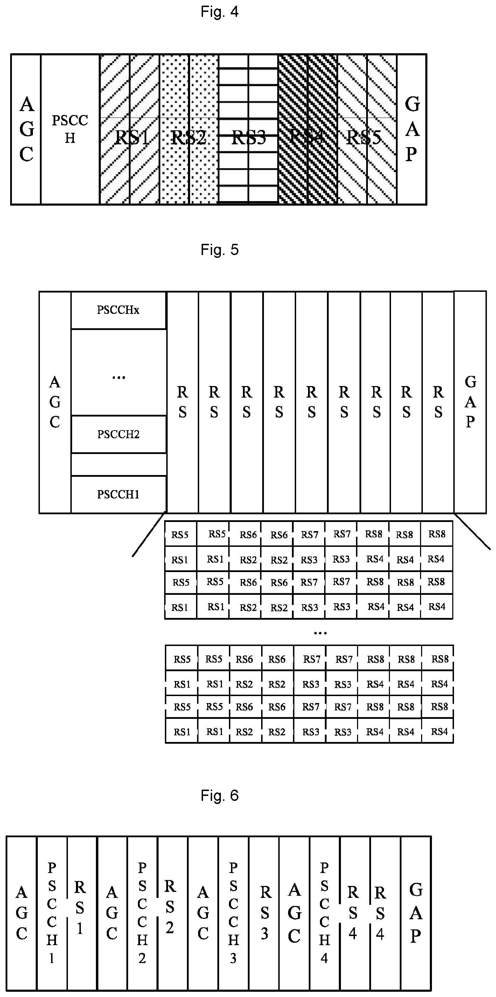

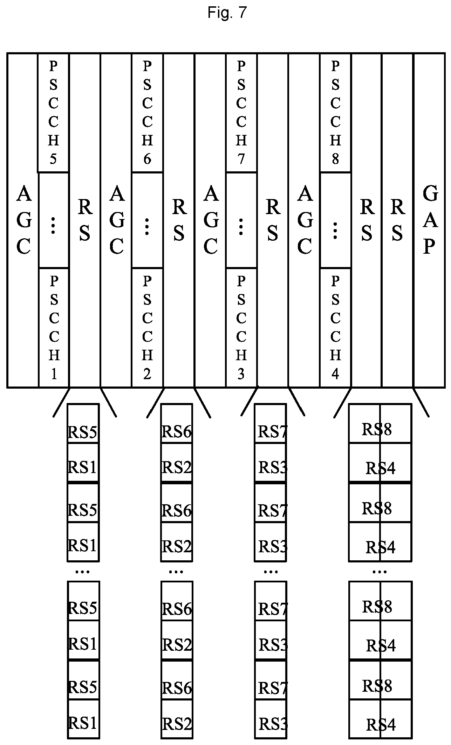

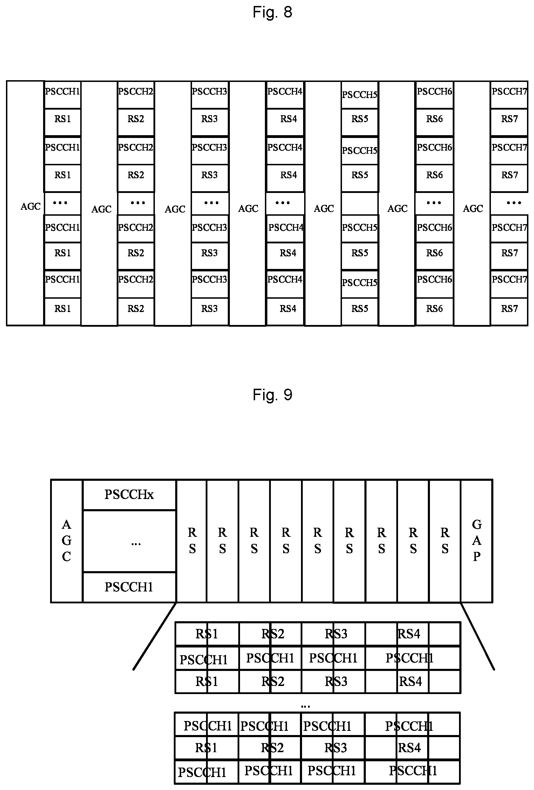

In some embodiments of the present application, when the beam sweeping channel includes the PSCCH and the RS, a channel structure of the beam sweeping channel may include:
Method 1: As shown in Fig. 4, the multiplexing method for the PSCCH and the RS is time division multiplexing (TDM) in a single slot in the time domain, and an RS multiplexing method is TDM. Symbols in a single slot are divided into different RS resources. The beam sweeping channel in the frequency domain occupies L subchannels or L PRBs, and the PSCCH is associated with the RS in the slot, for example, RS1, RS2, RS3, RS4, and RS5 are associated with the PSCCH. Different RS resources in the time domain may be sent in different beam directions. In this case, a beam sending the PSCCH may have the same direction as or cover a beam direction of the associated RS; alternatively, all RS resources may be sent in the same beam direction, and the beam sending the PSCCH may have the same direction as the beam direction of the associated RS.
Method 2: As shown in Fig. 5, within a single slot in the time domain, the multiplexing method for the PSCCH and the RS is TDM, while the multiplexing method for the PSCCH in the frequency domain is frequency division multiplexing (FDM). The multiplexing methods among RSs are TDM and FDM. Symbols in a single slot in the time domain are divided into different RS resources, and each RS resource in the frequency domain occupies L subchannels or L PRBs and utilizes comb multiplexing. Different RS resources in the time domain are associated with a single PSCCH, for example, RS1, RS2, RS3, and RS4 are associated with PSCCH1, while RS5, RS6, RS7, and RS8 are associated with PSCCH2. Different RS resources in the time domain may be sent in different beam directions. In this case, a beam sending the PSCCH has the same direction as or covers that of a beam sending the associated RS. Alternatively, all RS resources may be sent in the same beam direction, and a beam sending the PSCCH may have the same direction as that of a beam sending the associated RS.
Method 3: As shown in Fig. 6, for a mini-slot structure, a single slot is divided into a plurality of mini-slots, each mini-slot contains an automatic gain control (AGC) symbol, a PSCCH symbol, and an RS symbol, and the beam sweeping channel occupies L subchannels or L PRBs in the frequency domain. The RS resources in different mini-slots in the time domain may be sent in different beam directions. In this case, a beam sending the PSCCH is the same as that of a beam sending the associated RS. Alternatively, the beam sweeping channels within all the mini-slots are sent in the same beam direction .
Method 4: As shown in Fig. 7, for a mini-slot structure, a single slot is divided into a plurality of mini-slots, and each mini-slot contains an AGC symbol, a PSCCH symbol, and an RS symbol. Within each mini-slot, the multiplexing method for the PSCCH and the RS is TDM, the multiplexing method for the PSCCH in the frequency domain is frequency division multiplexing (FDM), and the multiplexing method for the RS is FDM. In the frequency domain, each RS resource occupies L subchannels or L PRBs and utilizes comb multiplexing. Each PSCCH has an associated RS, for example, PSCCH1 is associated with RS1, and PSCCH5 is associated with RS5. The RS resources within different mini-slots in the time domain may be sent in different beam directions, and in this case, a beam sending the PSCCH may have the same direction as that of a beam sending the associated RS. Alternatively, the PSCCH and the associated RS within different mini-slots may be sent in the same beam direction.
Method 5: As shown in Fig. 8, for a mini-slot structure, a single slot is divided into a plurality of mini-slots, and each mini-slot contains an AGC symbol and a symbol carrying both the PSCCH and the associated RS. In the frequency domain, the beam sweeping channel occupies L subchannels or L PRBs, and within each mini-slot, the multiplexing method for the PSCCH and the associated RS is FDM. Beam sweeping channels within different mini-slots may be sent in different beam directions, and in this case, a beam sending the PSCCH may be the same as that of a beam sending the associated RS. Alternatively, the beam sweeping channels within all the mini-slots are sent in the same beam direction.
Method 6: Referring to Fig. 9, the multiplexing method for the PSCCH and the RS is TDM+FDM, the multiplexing method for the PSCCH is FDM+TDM, and the multiplexing method for the RS is TDM or TDM+FDM. Symbols within a single slot in the time domain are divided into different RS resources, and each RS resource in the frequency domain occupies L subchannels or L PRBs and utilizes comb multiplexing with the PSCCH. Different RS resources in the time domain are associated with a single PSCCH, for example, RS1, RS2, RS3, and RS4 are associated with PSCCH1. RS resources at different symbols in the time domain may be sent in different beam directions. In this case, a beam sending the PSCCH may have the same direction as or cover a direction of a beam sending the associated RS. Alternatively, the PSCCH and the associated RS are sent in the same beam direction.

It should be noted that in Fig. 4 to Fig. 9, one RS resource in the time domain corresponds to one beam sweeping resource in the time domain.

It should be noted that the number of time-domain symbols, a starting symbol position, and pattern information of occupied time-domain symbol positions for the RS in the slot may be determined by the configured or pre-configured information. A starting RE position , a starting PRB position, the number of occupied PRBs or subchannels, and a comb mapping structure in the frequency domain are also determined by the configured or pre-configured information.

In some embodiments, the physical sidelink control channel and/or the physical sidelink shared channel are used to carry at least one of the following information:
a source identifier;
a destination identifier;
application service information;
application ID;
beam sweeping resource group ID;
beam ID;
time-frequency indication information;
reference signal indication information;
beam measurement assistance information.

Further, the physical sidelink control channel and/or the physical sidelink shared channel may also be used to carry at least one of the following: a zone identifier (Zone ID), priority information, indication bits, modulation and coding methods, modulation and coding scheme (MCS) table indication, hybrid automatic repeat request (HARQ) related information, reserve bits.

It should be noted that the above-mentioned information in some embodiments is preferably carried by the physical sidelink control channel, and information that cannot be carried by the physical sidelink control channel is carried by the physical sidelink shared channel.

In some embodiments of the present application, the reference signal indication information includes at least one of the following:
time-domain position information of the reference signal;
frequency-domain configuration information of the reference signal;
the number of ports for the reference signal;
sequence information of the reference signal.

The time-domain position information of the reference signal includes at least one of the following:
time-domain pattern information of the reference signal;
time-domain starting symbol position information of the reference signal;
time-domain symbol number information of the reference signal.

The frequency-domain configuration information of the reference signal includes at least one of the following:
frequency-domain pattern information of the reference signal (e.g., a starting RE, a comb size, comb offset, cyclic shift/OCC);
frequency-domain starting PRB position information of the reference signal;
frequency-domain starting subchannel position information of the reference signal;
information about the number of PRBs and/or subchannels occupied by the reference signal in the frequency domain;
frequency-domain shift information of the reference signal (i.e., the number of PRBs offset relative to the frequency-domain reference point).

The beam measurement assistance information includes at least one of the following:
beam index information, which may be indicated by a reference signal port indicator field, or a reference signal sequence, or a combination of ports and sequences;
beam count information, which includes the total number of different beam directions represented by sent reference signals (the total number of narrow beams under a current wide beam) and the total number of different beam directions for sending control channels (the total number of wide beams);
beam resource indication information, which includes resource indication information reserved by a current device for all transmitting beams.

In some embodiments, the above-mentioned method further includes:
determining a type of the beam sweeping resource group included in the first resource pool according to the configured or pre-configured information.

The type of the beam sweeping resource group is a first type or a second type.

According to the first type, the beam sweeping resource group includes M×N slots, and only one beam sweeping resource is contained within a single slot in the time domain.

According to the second type, the beam sweeping resource group includes X slots, and a single slot in the time domain includes m beam sweeping resources, where X=ceil (M×N/m), and m is determined according to time-domain configuration information of the beam sweeping resources.

Ceil refers to rounding up to the nearest integer.

It should be noted that the above-mentioned M×N slots may be M×N slots continuously configured for beam sweeping, and similarly, X slots may be slots continuously configured for beam sweeping.

It should be noted that when the M×N slots or X slots are consecutive slots, a slot specially configured for beam reporting, such as a PSFCH feedback slot, may be included between adjacent slots for sending the beam sweeping channel.

In some embodiments of the present application, X may also be another value, such as X=ceil (M/m)×N, or X=ceil (N/m)×M, or X=ceil (M/m)+ceil (N/m).

Specifically, frequency-domain positions of beam sweeping resources in the beam sweeping resource group are the same or different.

In some embodiments of the present application, the M×N slots or X slots include a plurality of orthogonal beam sweeping resource groups.

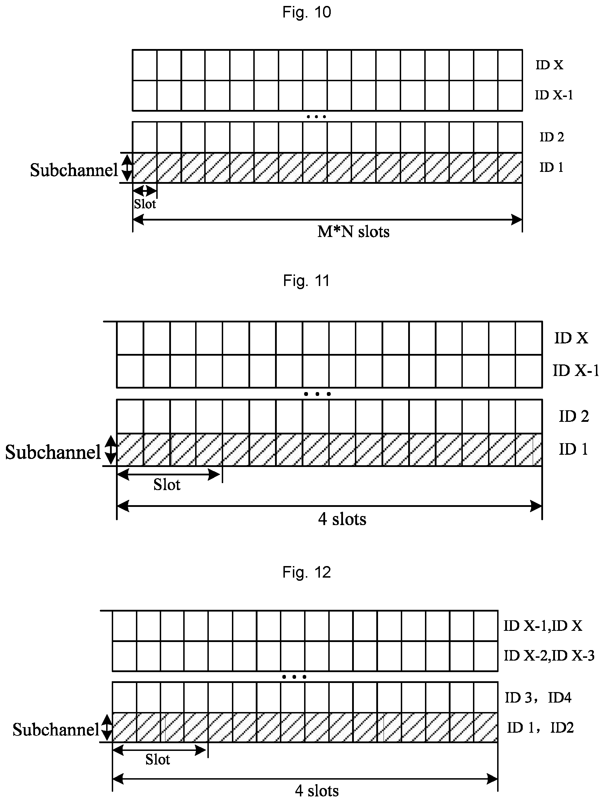

In some embodiments of the present application, as shown in Fig.10, Fig. 10 illustrates a schematic diagram of the beam sweeping resource group of the first type. Assuming that higher-layer configured or pre-configured parameters M and N are both 4, one beam sweeping resource occupies a single slot in the time domain and one subchannel in the frequency domain, and each of 16 slots in the time domain includes one beam sweeping resource, forming the beam sweeping resource group (e.g., resources identified by diagonal hatching in Fig. 10). Further, the 16 slots contain a plurality of orthogonal beam sweeping resource groups, and each beam sweeping resource group may correspond to one ID. In Fig. 10, frequency-domain positions of beam sweeping resources in a single beam sweeping resource group are the same.

In some embodiments of the present application, as shown in Fig.11, Fig. 11 illustrates a schematic diagram of the beam sweeping resource group of the second type. Assuming that higher-layer configured or pre-configured parameters M and N are both 4, a single slot in the time domain is divided into four RS resources (i.e., m = 4), occupying one subchannel in the frequency domain without comb multiplexing. According to X=ceil (M*N/m), each of the four slots in the time domain includes four beam sweeping resources, forming a beam sweeping resource group (resources identified by diagonal hatching in Fig. 11). Further, the four slots contain a plurality of orthogonal beam sweeping resource groups, and each beam sweeping resource group may correspond to one ID. In Fig. 11, frequency-domain positions of beam sweeping resources in a single beam sweeping resource group are the same.

In some embodiments of the present application, as shown in Fig.12, Fig. 12 illustrates a schematic diagram of the beam sweeping resource group of the second type. Assuming that higher-layer configured or pre-configured parameters M and N are both 4, a single slot in the time domain is divided into four RS resources (i.e., m=4), occupying one subchannel in the frequency domain with comb multiplexing. According to X=ceil (M*N/m), each of the four slots in the time domain includes four beam sweeping resources, forming a beam sweeping resource group (resources identified by diagonal hatching in Fig. 12). Further, the four slots contain a plurality of orthogonal beam sweeping resource groups, and each beam sweeping resource group may correspond to one ID. In Fig. 12, frequency-domain positions of beam sweeping resources in a single beam sweeping resource group are the same.

Additionally, different beam sweeping resource groups may have the same time-domain position but have different frequency-domain positions. For example, in Fig. 12, a beam sweeping resource group ID 1 and a beam sweeping resource group ID 2 share the same time-domain resources while utilizing comb multiplexing on corresponding subchannels in the frequency domain.

In some embodiments, the determining a type of the beam sweeping resource group included in the first resource pool according to the configured or pre-configured information includes:
acquiring a beam switching capability indication according to the configured or pre-configured information;
determining that the beam sweeping resource group included in the first resource pool is of the first type when the beam switching capability indication indicates that the first terminal does not support beam switching within a single slot; and
determining that the beam sweeping resource group included in the first resource pool is of the second type when the beam switching capability indication indicates that the first terminal supports beam switching within a single slot.

During specific implementation, when beam switching capability indication information is a first value, the type of the beam sweeping resource group is as follows: in the time domain, a single beam sweeping resource corresponds to a single slot or only one beam sweeping channel resource exists within a single slot, while in the frequency domain, determination is performed according to the frequency-domain configuration information in beam sweeping resource configuration information. In this case, within M×N consecutive slots configured for the beam sweeping channels, each slot contains one beam sweeping resource, resulting in a total of M×N beam sweeping resources that form a single beam sweeping resource group, where a slot index of a starting beam sweeping resource in one beam sweeping resource group is M×N×k or M×N×k + time-domain offset value of the beam sweeping resource group, and k is a non-negative integer.

During specific implementation, when the beam switching capability indication information is a second value, the beam sweeping resource group is as follows: in the time domain, a single slot contains a plurality of beam sweeping resources m, while in the frequency domain, determination is performed according to the frequency-domain configuration information in beam sweeping channel resource configuration information. In this case, within X consecutive slots configured for the beam sweeping channels, each slot contains m beam sweeping resources (m resources that are orthogonal in the time domain), resulting in a total of X×m beam sweeping resources that form a single beam sweeping resource group. A slot index of a starting beam sweeping channel resource in one beam sweeping resource group is X×k or X×k + time-domain offset value of the beam sweeping resource group, and k is a non-negative integer.

In the above-mentioned embodiments, when the beam sweeping resource group is of the first type, a single slot includes one beam sweeping resource, and accordingly beam switching within a single slot is not required. Therefore, when the beam switching capability indication indicates that the first terminal does not support beam switching within a single slot, it is determined that the beam sweeping resource group included in the first resource pool is of the first type. Similarly, when the beam sweeping resource group is of the second type, a single slot includes a plurality of beam sweeping resources, beam switching can be performed within a single slot, and therefore when the beam switching capability indication indicates that the first terminal supports beam switching within a single slot, it is determined that the beam sweeping resource group included in the first resource pool is of the second type.

In some embodiments, the step of sending a beam sweeping channel on the target beam sweeping resource group includes:
sending the beam sweeping channel by using a first method or a second method in a case where the target beam sweeping resource group is of the first type; and
sending the beam sweeping channel by using a third method or a fourth method in a case where the target beam sweeping resource group is of the second type.

The first method includes: dividing the beam sweeping resources across every M consecutive slots into one resource subset, and on the beam sweeping resources within each resource subset, sending the beam sweeping channel using different beam directions.

The second method includes: dividing the beam sweeping resources across every N consecutive slots into one resource subset, and on the beam sweeping resources within each resource subset, sending the beam sweeping channel using the same beam direction.

The third method includes: dividing every M consecutive beam sweeping resources in the time domain into one resource subset, and on the beam sweeping resources within each resource subset, sending the beam sweeping channel using different beam directions, or sending the reference signal in the beam sweeping channel using different beam directions.

The fourth method includes: dividing every N consecutive beam sweeping resources in the time domain into one resource subset, and on the beam sweeping resources within each resource subset, sending the beam sweeping channel using the same beam direction, or sending the reference signal in the beam sweeping channel using the same beam direction.

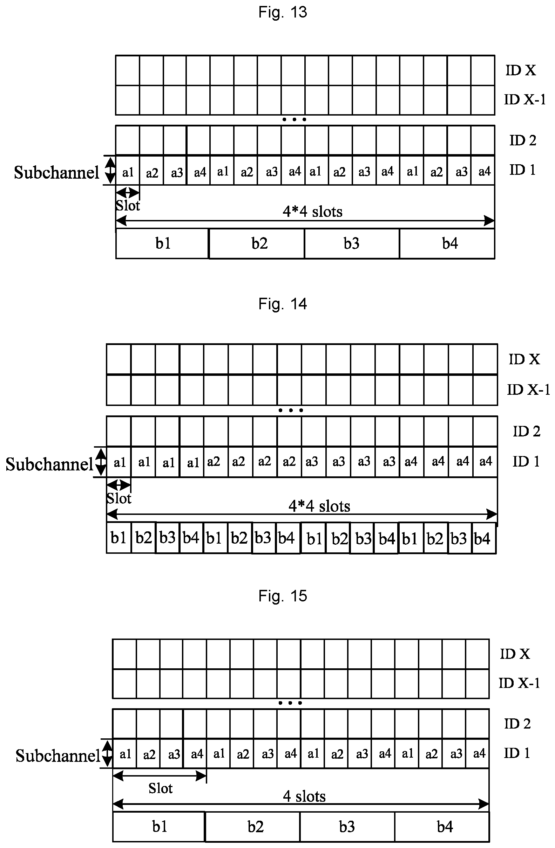

In some embodiments of the present application, referring to Fig.13, Fig. 13 illustrates a schematic diagram of the beam sweeping resource group of the first type and sending the beam sweeping channel using the first method. M and N are both 4, that is, the first terminal includes four transmitting beams a1, a2, a3 and a4 in different directions, and the second terminal includes four receiving beams b1, b2, b3, and b4 in different directions. On a first terminal side, the beam sweeping resources across every four consecutive slots are divided into one resource subset, and on the beam sweeping resources within each resource subset, the beam sweeping channel is sent by using different beam directions (a1, a2, a3, and a4). Correspondingly, on a second terminal side, the beam sweeping resources across every four consecutive slots are divided into one resource subset, and on the beam sweeping resources within each resource subset, the beam sweeping channel is received using the same beam direction (b1, b2, b3, or b4).

In some embodiments of the present application, referring to Fig. 14, Fig. 14 illustrates a schematic diagram of the beam sweeping resource group of the first type and sending the beam sweeping channel using the second method. M and N are both 4, that is, the first terminal includes four transmitting beams a1, a2, a3, and a4 in different directions, and the second terminal includes four receiving beams b1, b2, b3, and b4 in different directions. On the first terminal side, the beam sweeping resources across every four consecutive slots are divided into one resource subset, and on the beam sweeping resources within each resource subset, the beam sweeping channel is sent by using the same beam direction (a1, a2, a3, or a4). Correspondingly, on the second terminal side, the beam sweeping resources across every four consecutive slots are divided into one resource subset, and on the beam sweeping resources within each resource subset, the beam sweeping channel is received using different beam directions (b1, b2, b3, and b4).

In some embodiments of the present application, referring to Fig. 15, Fig. 15 illustrates a schematic diagram of the beam sweeping resource group of the second type and sending the beam sweeping channel using the third method. M and N are both 4, that is, the first terminal includes four transmitting beams a1, a2, a3, and a4 in different directions, and the second terminal includes four receiving beams b1, b2, b3, and b4 in different directions. On the first terminal side, every four consecutive beam sweeping resources in the time domain are divided into one resource subset, and on the beam sweeping resources within each resource subset, the beam sweeping channel is sent by using different beam directions (a1, a2, a3, and a4) or the reference signal in the beam sweeping channel is sent by using different beam directions. Correspondingly, on the second terminal side, every four consecutive beam sweeping resources in the time domain are divided into one resource subset, and on the beam sweeping resources within each resource subset, the beam sweeping channel is received using the same beam direction (b1, b2, b3, or b4).

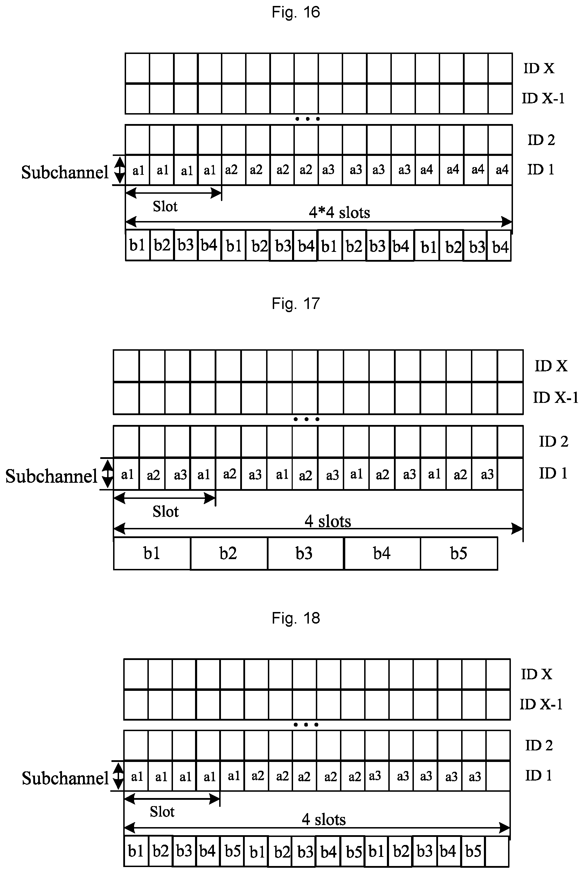

In some embodiments of the present application, referring to Fig. 16, Fig. 16 illustrates a schematic diagram of the beam sweeping resource group of the second type and sending the beam sweeping channel using the fourth method. M and N are both 4, that is, the first terminal includes four transmitting beams a1, a2, a3 and a4 in different directions, and the second terminal includes four receiving beams b1, b2, b3 and b4 in different directions. On the first terminal side, every four consecutive beam sweeping resources in the time domain are divided into one resource subset, and on the beam sweeping resources within each resource subset, the beam sweeping channel is sent by using the same beam direction (a1, a2, a3, or a4) or the reference signal in the beam sweeping channel is sent by using the same beam direction. Correspondingly, on the second terminal side, every four consecutive beam sweeping resources in the time domain are divided into one resource subset, and on the beam sweeping resources within each resource subset, the beam sweeping channel is received using different beam directions (b1, b2, b3, and b4).

In some embodiments of the present application, referring to Fig. 17, Fig. 17 illustrates a schematic diagram of the beam sweeping resource group of the second type and sending the beam sweeping channel using the third method. M is 3, and N is 5, that is, the first terminal includes three transmitting beams a1, a2, and a3 in different directions, and the second terminal includes five receiving beams b1, b2, b3, b4, and b5 in different directions. On the first terminal side, every three consecutive beam sweeping resources in the time domain are divided into one resource subset, and on the beam sweeping resources within each resource subset, the beam sweeping channel is sent by using different beam directions (a1, a2, and a3) or the reference signal in the beam sweeping channel is sent by using different beam directions. Correspondingly, on the second terminal side, every three consecutive beam sweeping resources in the time domain are divided into one resource subset, and on the beam sweeping resources within each resource subset, the beam sweeping channel is received using the same beam direction (b1, b2, b3, b4, or b5).

In some embodiments of the present application, referring to Fig. 18, Fig. 18 illustrates a schematic diagram of the beam sweeping resource group of the second type and sending the beam sweeping channel using the fourth method. M is 3, and N is 5, that is, the first terminal includes three transmitting beams a1, a2, and a3 in different directions, and the second terminal includes five receiving beams b1, b2, b3, b4, and b5 in different directions. On the first terminal side, every five consecutive beam sweeping resources in the time domain are divided into one resource subset, and on the beam sweeping resources within each resource subset, the beam sweeping channel is sent by using the same beam direction (a1, a2, or a3) or the reference signal in the beam sweeping channel is sent by using the same beam direction. Correspondingly, on the second terminal side, every five consecutive beam sweeping resources in the time domain are divided into one resource subset, and on the beam sweeping resources within each resource subset, the beam sweeping channel is received using different beam directions (b1, b2, b3, b4, and b5).

It should be noted that the application of the last beam sweeping resource position in Fig. 17 and Fig. 18 depends on the UE implementation. For example, the last beam sweeping resource position may be used for the first terminal side to send the reference signal and/or for the second terminal side to receive the reference signal and perform measurements.

In some embodiments, the above-mentioned method for beam sweeping further includes:
when the beam sweeping channel is sent by using the third method, and on the beam sweeping resources within each resource subset, the reference signal in the beam sweeping channel is sent by using different beam directions, within a single slot, beams for sending the physical sidelink control channel of the beam sweeping channel include the beam directions for sending the reference signal in the beam sweeping channel within the slot; and
when the beam sweeping channel is sent by using the fourth method, and on the beam sweeping resources within each resource subset, the reference signal in the beam sweeping channel is sent by using the same beam direction, within a single slot, the beams of the physical sidelink control channel sending the beam sweeping channel include the beam directions for sending the reference signal in the beam sweeping channel within the slot.

In some embodiments of the present application, for a beam sweeping channel example shown in Fig. 4, the beam for sending the PSCCH includes the beam directions for sending the reference signals RS1, RS2, RS3, and RS4.

In some embodiments of the present application, by causing the beam of the physical sidelink control channel sending the beam sweeping channel to include the beam directions for sending the reference signal in the beam sweeping channel within the slot, the receiving terminal can decode the PSCCH to obtain information related to reference signal measurements and complete beam measurements.

In some embodiments, the above-mentioned method for beam sweeping further includes the following steps:
in the first method, if the number of beam directions supported by the first terminal is greater than or equal to M, the M beam directions supported by the first terminal are in one-to-one correspondence with the beam sweeping resources across the M consecutive slots;
in the first method, if the number of beam directions supported by the first terminal is less than M, each beam direction supported by the first terminal corresponds to at least one of the beam sweeping resources across the M consecutive slots;
in the third method, if the number of beam directions supported by the first terminal is greater than or equal to M, the M beam directions supported by the first terminal are in one-to-one correspondence with the M consecutive beam sweeping resources; and
in the third method, if the number of beam directions supported by the first terminal is less than M, each beam direction supported by the first terminal corresponds to at least one of the M consecutive beam sweeping resources.

In the second method or the fourth method, if the number of beam directions supported by the first terminal is greater than or equal to M, different beam directions are used among different resource subsets; and
in the second method or the fourth method, if the number of beam directions supported by the first terminal is less than M, the number of the beam directions supported by the first terminal is traversed and utilized across at least different resource subsets.

For example, with reference to Fig. 13, if higher-layer configured or pre-configured M and N are 4, the beam sweeping resources on every four consecutive slots are divided into one resource subset on the first terminal side. If the first terminal supports four beam sweeping directions (a1, a2, a3, and a4), a1, a2, a3, and a4 are in one-to-one correspondence with the four beam sweeping resources in one resource subset. If the first terminal supports three beam sweeping directions (a1, a2, and a3), a1, a2, a3, and a1 are in one-to-one correspondence with the four beam sweeping resources in one resource subset, or a1, a2, a3, and a2 are in one-to-one correspondence with the four beam sweeping resources in one resource subset, or a1, a2, a3, and a3 are in one-to-one correspondence with the four beam sweeping resources in one resource subset, or a1, a2, and a3 are in one-to-one correspondence with three beam sweeping resources in one resource subset (with one beam sweeping resource not sending the beam sweeping channel).

In some embodiments of the present application, when the number of beams supported by the first terminal is less than the number M of directions of higher-layer configured or pre-configured transmitting beams, the beams supported by the first terminal are at least traversed.

In some embodiments of the present application, the sending the beam sweeping channel by using a first method or a second method in a case where the target beam sweeping resource group is of the first type includes:
acquiring a beam sweeping method indication according to the configured or pre-configured information;
sending the beam sweeping channel by using the first method in a case where the target beam sweeping resource group is of the first type and the beam sweeping method indication indicates transmitting beam sweeping; and
sending the beam sweeping channel by using the second method in a case where the target beam sweeping resource group is of the first type and the beam sweeping method indication indicates receiving beam sweeping.

During specific implementation, in a case where the beam sweeping resource group is of the first type, when the beam sweeping method indication is a third value, it indicates transmitting beam sweeping, and the beam sweeping channel is sent by using the first method; and when the beam sweeping method indication is a fourth value, it indicates transmitting beam sweeping, and the beam sweeping channel is sent by using the second method.

In some embodiments of the present application, the sending the beam sweeping channel by using a third method or a fourth method in a case where the target beam sweeping resource group is of the second type includes:
acquiring a beam sweeping method indication according to the configured or pre-configured information;
sending the beam sweeping channel by using the third method in a case where the target beam sweeping resource group is of the second type and the beam sweeping method indication indicates transmitting beam sweeping; and
sending the beam sweeping channel by using the fourth method in a case where the target beam sweeping resource group is of the second type and the beam sweeping method indication indicates receiving beam sweeping.

During specific implementation, in a case where the beam sweeping resource group is of the second type, when the beam sweeping method indication is the third value, it indicates transmitting beam sweeping, and the beam sweeping channel is sent by using the third method; and when the beam sweeping method indication is the fourth value, it indicates transmitting beam sweeping, and the beam sweeping channel is sent by using the fourth method.

In some embodiments of the present application, the method further includes:
determining a type of the beam sweeping resource group included in the first resource pool according to the configured or pre-configured information.

The type of the beam sweeping resource group is a third type or a fourth type.

According to the third type, the beam sweeping resource group includes M+N slots, and only one beam sweeping resource is contained within a single slot in the time domain.

According to the fourth type, the beam sweeping resource group includes X slots, and a single slot in the time domain includes m beam sweeping resources, where X=ceil (M/m)+ceil (N/m), and m is determined according to time-domain configuration information of the beam sweeping resources.

Ceil refers to rounding up to the nearest integer, and M, N, X, and m are positive integers.

It should be noted that the above-mentioned M+N slots may be M+N consecutive slots, or M+N discrete slots. Similarly, the X slots may be consecutive slots or X discrete slots.

It should be noted that when the M+N slots or X slots are consecutive slots, a slot specially configured for beam reporting, such as a PSFCH feedback slot, may be included between adjacent slots for sending the beam sweeping channel.

During specific implementation, for the third type, the higher-layer configured or pre-configured parameters are M and N. Each beam sweeping resource occupies a single slot in the time domain, and M+N consecutive beam sweeping resources in the time domain form one beam sweeping resource group. In some embodiments of the present application, the M+N slots include a plurality of orthogonal beam sweeping resource groups, and each beam sweeping resource group corresponds to one ID.

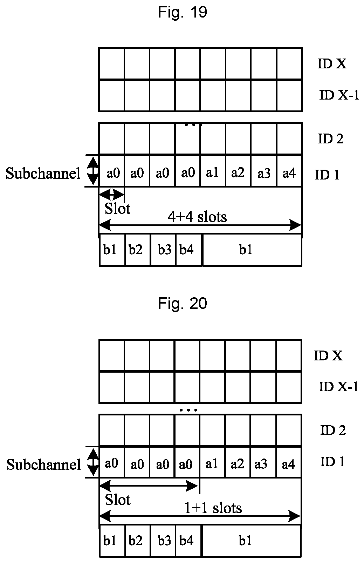

In some embodiments of the present application, with reference to Fig. 19, higher-layer configured or pre-configured M and N are 4, M+N=8 consecutive beam sweeping resources in the time domain form one beam sweeping resource group.

During specific implementation, for the fourth type, the higher-layer configured or pre-configured parameters are M and N. Each slot in the time domain contains m beam sweeping resources, and ceil (M/m)+ceil (N/m) consecutive beam sweeping resources in the time domain form one beam sweeping resource group. In some embodiments of the present application, the ceil (M/m)+ceil (N/m) slots include a plurality of orthogonal beam sweeping resource groups, and each beam sweeping resource group corresponds to one ID.

In some embodiments of the present application, with reference to Fig. 20, higher-layer configured or pre-configured parameters M and N are 4, a single slot in the time domain contains four beam sweeping resources, and ceil (M/m)+ceil (N/m)=1+1=2 consecutive beam sweeping resources in the time domain form one beam sweeping resource group.

In some embodiments of the present application, the step of sending a beam sweeping channel on the target beam sweeping resource group includes:
sending the beam sweeping channel by using a method A in a case where the target beam sweeping resource group is of the third type; and
sending the beam sweeping channel by using a method B in a case where the target beam sweeping resource group is of the fourth type.

According to the method A, the beam sweeping channel is sent by using one wide beam or an omnidirectional beam on the first N beam sweeping resources within the beam sweeping resource group; and the beam sweeping channel is sent by using different beam directions on the last M beam sweeping resources within the beam sweeping resource group, where if the number of beam directions supported by the first terminal is greater than or equal to M, the beam sweeping channel is sent by M beams in different directions supported by the first terminal; and if the number of beam directions supported by the first terminal is less than M, the number of the beam directions supported by the first terminal is at least traversed when the beam sweeping channel is sent.

According to the method B: the beam sweeping channel is sent by using one wide beam or an omnidirectional beam on the first N beam sweeping resources within the first ceil (N/m) slots of the beam sweeping resource group; and the beam sweeping channel is sent by using different beam directions on the first M beam sweeping resources within the last ceil (M/m) slots of the beam sweeping resource group, where if the number of beam directions supported by the first terminal is greater than or equal to M, the beam sweeping channel is sent by M beams in different directions supported by the second terminal; and if the number of beam directions supported by the first terminal is less than M, the number of the beams supported by the first terminal is at least traversed when the beam sweeping channel is sent.

Correspondingly, in a case where the beam sweeping resource group is of the third type, the second terminal adopts a method C to receive the beam sweeping channel; and in a case where the beam sweeping resource group is of the fourth type, the second terminal adopts a method D to receive the beam sweeping channel.

According to the method C,
the second terminal receives the beam sweeping channel by using different beam directions on the first N beam sweeping resources within the beam sweeping resource group, where if the number of beam directions supported by the second terminal is greater than or equal to N, the second terminal receives the beam sweeping channel by using N different beam directions; and if the number of beam directions supported by the second terminal is less than N, the number of the beam directions supported by the second terminal is at least traversed when the beam sweeping channel is received;
the second terminal determines, according to receiving beam measurements from the first N beam sweeping resources, a receiving beam with the highest RSRP measurement value of the reference signal received by the second terminal as a first target receiving beam; and
the second terminal receives the beam sweeping channel using the first target receiving beam on the last M beam sweeping resources within the beam sweeping resource group.

According to the method D,
the second terminal receives the beam sweeping channel by using different beam directions on the first N beam sweeping resources within the first ceil (N/m) slots of the beam sweeping resource group, where if the number of beams supported by the second terminal is greater than or equal to N, the beam sweeping channel is received by using N beams in different directions; and if the number of beam directions supported by the second terminal is less than N, the number of the beam directions supported by the second terminal is at least traversed when the beam sweeping channel is received, and both N and m are positive integers;
the second terminal determines, according to receiving beam measurements from the first N beam sweeping resources within the first ceil (N/m) slots, a receiving beam with the highest RSRP measurement value of the reference signal received by the second terminal as a second target receiving beam; and
the second terminal receives the beam sweeping channel using the second target receiving beam on the first M beam sweeping resources within the last ceil (N/m) slots of the beam sweeping resource group.

In some embodiments of the present application, as shown in Fig. 19, the higher-layer configured or pre-configured M and N are both 4. In the time domain, M+N=8 consecutive beam sweeping resources form one beam sweeping resource group, which is of the third type. The first terminal has four beams a1 to a4, and the second terminal has four beams b1 to b4, where a0 is one omnidirectional beam or wide beam of the first terminal, b1 is the determined first target receiving beam of the second terminal, and a0 is not included among the M beams supported by the first terminal. On the first four beam sweeping resources within the beam sweeping resource group, the beam sweeping channel is sent by using the wide beam or omnidirectional beam a0. On the last four beam sweeping resources within the beam sweeping resource group, the beam sweeping channel is sent by using different beam directions (a1 to a4).

Correspondingly, on the first four beam sweeping resources within the beam sweeping resource group, the second terminal receives the beam sweeping channel by using different beam directions; according to receiving beam measurements from the first four beam sweeping resources, the beam b1 is determined as the first target receiving beam; and on the last four beam sweeping resources within the beam sweeping resource group, the beam sweeping channel is received by using the beam b1.

In some embodiments of the present application, with reference to Fig. 20, higher-layer configured or pre-configured M and N are 4, a single slot in the time domain contains four beam sweeping resources, and 2 (i.e., ceil (M/m)+ceil (N/m)=1+1=2) consecutive beam sweeping resources in the time domain form one beam sweeping resource group, which is of the fourth type. The first terminal has four beams a1 to a4, and the second terminal has four beams b1 to b4, where a0 is one omnidirectional beam or wide beam of the first terminal, b1 is the determined second target receiving beam of the second terminal, and a0 is not included among the M beams supported by the first terminal. On the first four beam sweeping resources within the first slot of the beam sweeping resource group, the beam sweeping channel is sent by using the wide beam or omnidirectional beam a0. On the first four beam sweeping resources within the last slot of the beam sweeping resource group, the beam sweeping channel is sent by using different beam directions (a1 to a4).

Correspondingly, on the first four beam sweeping resources within the first slot of the beam sweeping resource group, the second terminal receives the beam sweeping channel by using different beam directions; according to receiving beam measurements from the first four beam sweeping resources within the first slot, the beam b1 is determined as the second target receiving beam; and on the first four beam sweeping resources within the last slot of the beam sweeping resource group, the beam sweeping channel is received by using the beam b1.

In some embodiments of the present application, the step of selecting a target beam sweeping resource group from a first resource pool according to configured or pre-configured information includes:
excluding a first beam sweeping resource group from a candidate beam sweeping resource group set included in the first resource pool according to the configured or pre-configured information and sensing information, to obtain an available candidate beam sweeping resource group set; and
selecting the target beam sweeping resource group according to the available candidate beam sweeping resource group set.

The sensing information includes at least one of the following:
frequency-domain information of beam sweeping resources occupied by a third terminal;
time-domain information of the beam sweeping resources occupied by the third terminal;
a transmission priority value of a beam sweeping channel sent by the third terminal;
an ID of beam sweeping resource group occupied by the third terminal;
a reservation period of the beam sweeping resources of the third terminal;
a reference signal received power (RSRP) measurement value of a reference signal sent by the third terminal.

In some embodiments of the present application, the first beam sweeping resource group satisfies the following conditions:
The first beam sweeping resource group or a periodically reserved resource group associated with the first beam sweeping resource group overlaps with a second beam sweeping resource group; and the second beam sweeping resource group includes: a beam sweeping resource group occupied by the third terminal or a periodically reserved resource group associated with the beam sweeping resource group occupied by the third terminal.

The third terminal satisfies at least one of the following conditions:
the highest RSRP measurement value among RSRP measurement values of reference signals sent by the third terminal within the occupied beam sweeping resource group is higher than a first threshold value; and
the transmission priority value of the beam sweeping channel sent by the third terminal is higher than that of the beam sweeping channel of the first terminal.

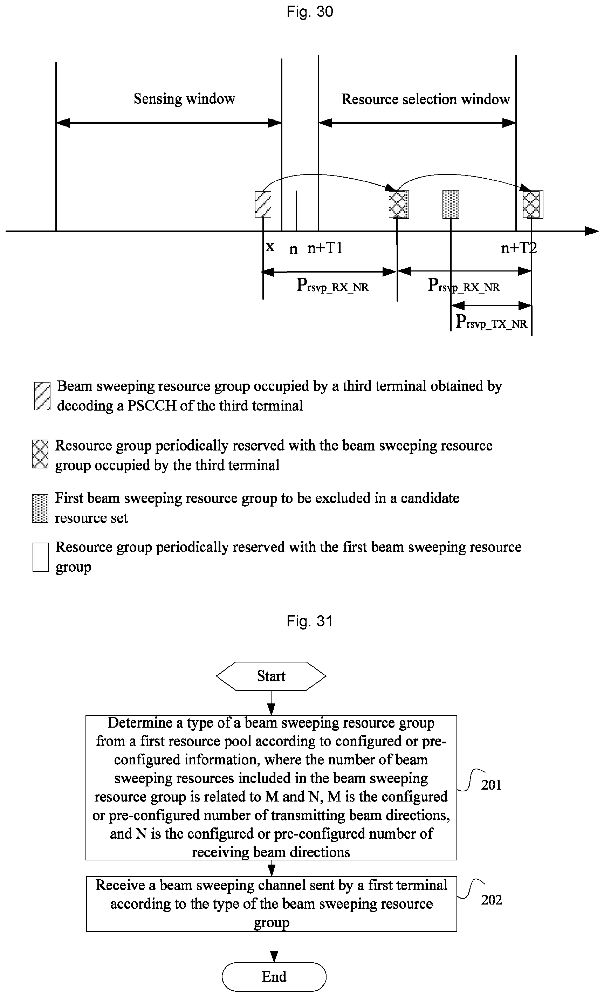

During specific implementation, as shown in Fig. 30, a resource selection window and a sensing window in the time domain contain an integer number of beam sweeping resource groups. A set of all beam sweeping resource groups within the resource selection window forms a candidate beam sweeping resource group set. The first terminal performs beam measurements using different receiving beams within the sensing window to obtain sensing information, decodes to obtain time-frequency positions and periods of beam sweeping resource groups occupied by the third terminal, and obtains RSRP measurement values between any beam pair from the receiving beams of the first terminal and transmitting beams of the third terminal (any beams ai and bi). If the first beam sweeping resource group overlaps with the second beam sweeping resource group corresponding to the third terminal, or if the periodically reserved resource group associated with the first beam sweeping resource group overlaps with the second beam sweeping resource group corresponding to the third terminal, and the highest RSRP value among the RSRP values measured by any pair of beams ai and bi is higher than the first threshold value, the first terminal excludes the first beam sweeping resource group from the candidate beam sweeping resource group set.

It should be noted that a reservation period of the periodically reserved resource group associated with the first beam sweeping resource group is a beam sweeping resource reservation period of the first terminal; and a reservation period of the periodically reserved resource group associated with the second beam sweeping resource group is a beam sweeping resource reservation period of the third terminal.

In some embodiments of the present application, after the step of sending a beam sweeping channel on the beam sweeping resource group, the method further includes:
receiving, on a physical sidelink feedback channel (PSFCH) time-domain resource corresponding to the beam sweeping resource within the beam sweeping resource group, a beam measurement report sent by the second terminal through a first beam,
where every N consecutive beam sweeping resources within the beam sweeping resource group are divided into one resource subset, the beam sweeping resource in each resource subset corresponds to one PSFCH time-domain resource, and the first beam refers to a beam used to send the beam sweeping channel on the beam sweeping resource corresponding to the PSFCH time-domain resource. Alternatively, every M consecutive beam sweeping resources within the beam sweeping resource group are divided into one resource subset, with one PSFCH time-domain resource corresponding to one beam sweeping resource in each resource subset, and the first beam includes a beam used to send the beam sweeping channel on the beam sweeping resource corresponding to the PSFCH time-domain resource.

In some embodiments of the present application, a slot position where the PSFCH is located is related to the configured offset value of the PSFCH and M.

In some embodiments of the present application, a method for configuring PSFCH resources in the time domain includes:
configuring one PSFCH time-domain resource on the last few symbols of a single slot; and
dividing the single slot into a plurality of PSFCH time-domain resources.

During specific implementation, a method for determining a time-domain position of the PSFCH within each beam sweeping resource group includes at least one of the following:
related to the PSFCH configured offset value and M, with each of the M PSFCH resources having one offset value;
related to the PSFCH configured offset value and M, where the M PSFCH resources are located on consecutive slots, and a first resource among the M PSFCH resource is determined based on the offset value; and
related to the PSFCH configured offset value, M, and a PSFCH interval, where the first resource among the M PSFCH resource has one offset value, and the other PSFCH resources differ from the first resource by an integer number of PSFCH intervals.

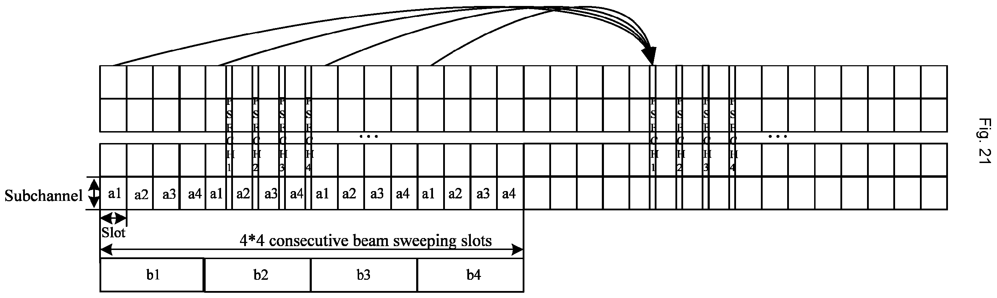

In some embodiments of the present application, referring to Fig. 21, Fig. 21 illustrates a schematic diagram of a PSFCH time-domain position for the embodiment shown in Fig.13. As shown in Fig. 21, assuming that a configured offset value of the PSFCH is four slots, each beam sweeping resource group correspondingly has one PSFCH time-domain resource in each of the M (M is 4 in Fig. 13) slots starting from the fifth slot. These PSFCH time-domain resources correspond to different beam sweeping resources in the previous beam sweeping resource group. For example, as indicated by the arrows in Fig. 21, in the time domain, every M slot resources within one beam sweeping resource group form one resource subset. First resources in each resource subset, totaling N resources, correspond to the PSFCH1 in the subsequent beam sweeping resource group. Similarly, second resources in each resource subset, totaling N (N is 4 in Fig. 13) resources, correspond to the PSFCH2 in the subsequent beam sweeping resource group, and so on.

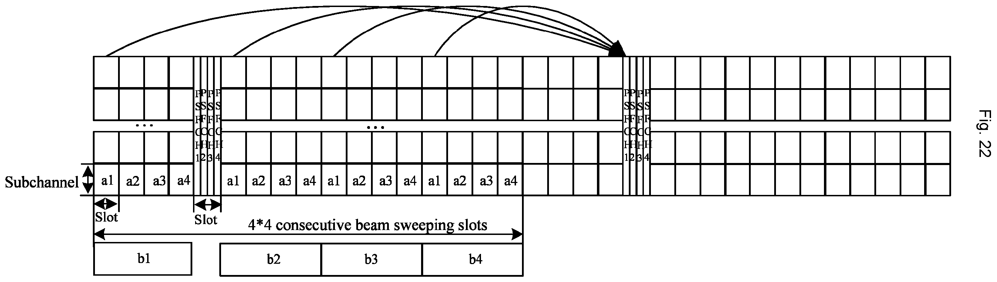

In some embodiments of the present application, referring to Fig. 22, Fig. 22 illustrates another schematic diagram of the PSFCH time-domain position for the embodiment shown in Fig.13. As shown in Fig. 22, assuming that a configured offset value of the PSFCH is four slots, starting from the fifth slot corresponding to each beam sweeping resource group, one or more slots exist, and these slots contain at least M (M is 4 in Fig. 13) PSFCH time-domain resources, respectively corresponding to different beam sweeping resources in the previous beam sweeping resource group. For example, as indicated by the arrows in Fig. 22, in the time domain, every M slot resources within one beam sweeping resource group form one resource subset. First resources in each resource subset, totaling N (N is 4 in Fig. 13) resources, correspond to the PSFCH1 in the subsequent beam sweeping resource group. Similarly, second resources in each resource subset, totaling N resources, correspond to the PSFCH2 in the subsequent beam sweeping resource group, and so on.

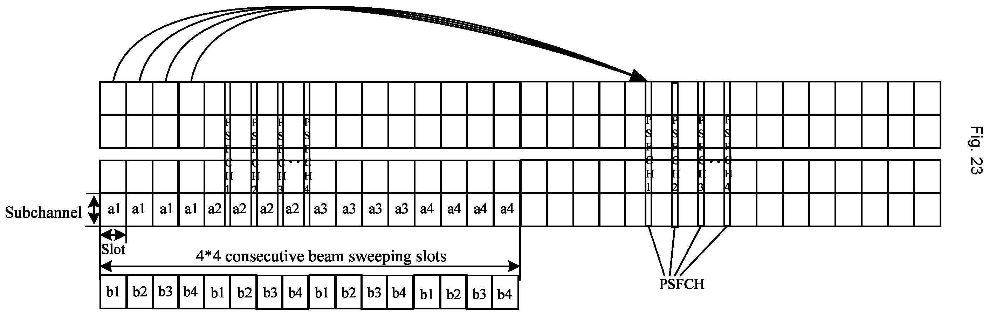

In some embodiments of the present application, referring to Fig. 23, Fig. 23 illustrates a schematic diagram of a PSFCH time-domain position for the embodiment shown in Fig.14. As shown in Fig. 23, assuming that a configured offset value of the PSFCH is four slots, each beam sweeping resource group correspondingly has one PSFCH time-domain resource in each of the four slots starting from the fifth slot. These PSFCH time-domain resources correspond to different beam sweeping resources in the previous beam sweeping resource group. For example, as indicated by the arrows in Fig. 23, in the time domain, every four slot resources within one beam sweeping resource group form one resource subset. A first resource subset corresponds to the PSFCH1 in the subsequent beam sweeping resource group, and similarly, a second resource subset corresponds to the PSFCH2 in the subsequent beam sweeping resource group, and so on.

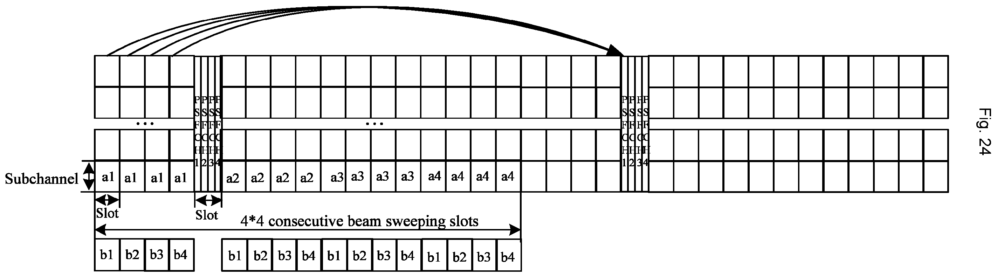

In some embodiments of the present application, referring to Fig. 24, Fig. 24 illustrates another schematic diagram of the PSFCH time-domain position for the embodiment shown in Fig.14. As shown in Fig. 24, assuming that a configured offset value of the PSFCH is four slots, starting from the fifth slot corresponding to each beam sweeping resource group, one or more slots exist, and these slots contain at least M PSFCH time-domain resources, respectively corresponding to different beam sweeping resources in the previous beam sweeping resource group. For example, as indicated by the arrows in the figure below, in the time domain, every N slot resources within one beam sweeping resource group form one resource subset. The beam sweeping resources in the first resource subset correspond to the PSFCH1 in the subsequent beam sweeping resource group, and similarly, the beam sweeping resources in the second resource subset correspond to the PSFCH2 in the subsequent beam sweeping resource group, and so on.

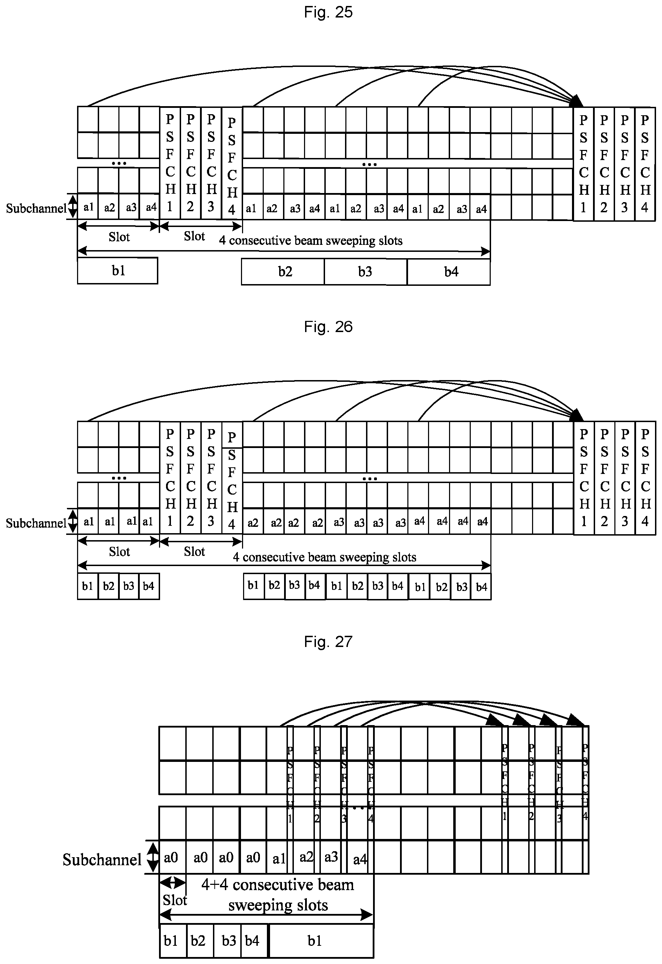

In some embodiments of the present application, referring to Fig. 25, Fig. 25 illustrates a schematic diagram of a PSFCH time-domain position for the embodiment shown in Fig.15. As shown in Fig. 25, assuming that a configured offset value of the PSFCH is a single slot, starting from the second slot corresponding to each beam sweeping resource group, one or more slots exist, and these slots contain at least M PSFCH time-domain resources, respectively corresponding to different beam sweeping resources in the previous beam sweeping resource group. For example, as indicated by the arrows in Fig. 25, in the time domain, every M (M is 4 in Fig. 15) beam sweeping resources within one beam sweeping resource group form one resource subset. The first resources in each resource subset, totaling N (N is 4 in Fig. 15) resources, correspond to the PSFCH1 in the subsequent beam sweeping resource group. Similarly, the second resources in each resource subset, totaling N resources, correspond to the PSFCH2 in the subsequent beam sweeping resource group, and so on.

In some embodiments of the present application, referring to Fig. 26, Fig. 26 illustrates a schematic diagram of a PSFCH time-domain position for the embodiment shown in Fig. 16. As shown in Fig. 26, assuming that a configured offset value of the PSFCH is a single slot, starting from the second slot corresponding to each beam sweeping resource group, one or more slots exist, and these slots contain at least M PSFCH time-domain resources, respectively corresponding to different beam sweeping resources in the previous beam sweeping resource group. For example, as indicated by the arrows in Fig. 26, in the time domain, every N (N=4) beam sweeping resources within one beam sweeping resource group form one resource subset. The beam sweeping resources in the first resource subset correspond to the PSFCH1 in the subsequent beam sweeping resource group, and similarly, the beam sweeping resources in the second resource subset correspond to the PSFCH2 in the subsequent beam sweeping resource group, and so on.

It should be noted that in a case where the beam sweeping resource group is of the third type, each of the last M beam sweeping resources in the beam sweeping resource group corresponds to one PSFCH time-domain resource, and these PSFCH resources are PSFCH time-domain resources in the next beam sweeping resource group.

Correspondingly, the second terminal sends a beam report on the PSFCH corresponding to a target beam sweeping resource among the last M beam sweeping resources, where the RSRP measurement value of the reference signal of the beam sweeping channel received by the second terminal on the target beam sweeping resource is the highest and is higher than a threshold, or the RSRP measurement value of the reference signal of the beam sweeping channel received by the second terminal on the target beam sweeping resource is higher than a threshold.

In some embodiments of the present application, referring to Fig. 27, Fig. 27 illustrates a schematic diagram of a PSFCH time-domain position for the embodiment shown in Fig. 18. As shown in Fig. 27, assuming that a configured offset value of the PSFCH is four slots, one PSFCH time-domain resource exists in each of the M (M=4) slots starting from the fifth slot corresponding to each beam sweeping resource group. The first/second/third/fourth resource among the last M (M=4) beam sweeping resources in the beam sweeping resource group indicated by the arrows in Fig. 27 are in one-to-one correspondence with PSFCH1/PSFCH2/PSFCH3/PSFCH4 in the next beam sweeping resource group.

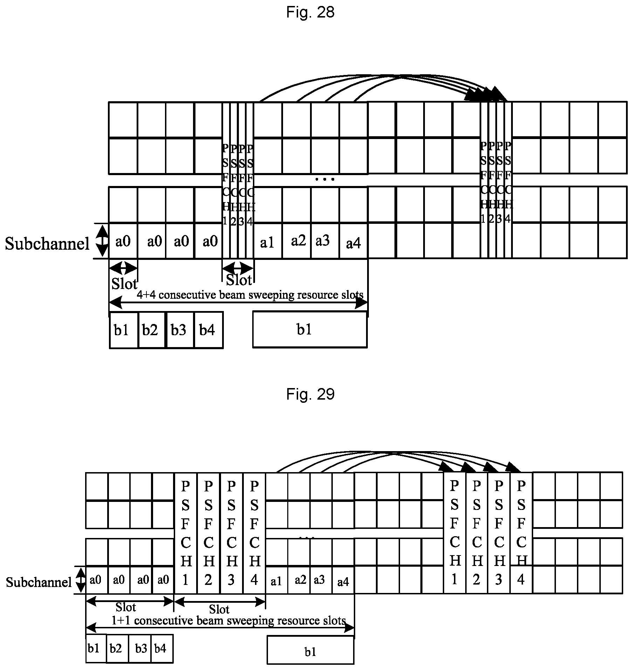

In some embodiments of the present application, referring to Fig. 28, Fig. 28 illustrates another schematic diagram of the PSFCH time-domain position for the embodiment shown in Fig.18. As shown in Fig. 28, assuming that a configured offset value of the PSFCH is four slots, starting from the fifth slot corresponding to each beam sweeping resource group, one or more slots exist, and these slots contain at least M (M=4) PSFCH time-domain resources. The first/second/third/fourth resource among the last M (M=4) beam sweeping resources in the beam sweeping resource group indicated by the arrows in Fig. 28 are in one-to-one correspondence with PSFCH1/PSFCH2/PSFCH3/PSFCH4 in the next beam sweeping resource group.

It should be noted that in a case where the beam sweeping resource group is of the fourth type, each of the first M beam sweeping resources within the last ceil (M/m) slots of the beam sweeping resource group corresponds to one PSFCH time-domain resource, and the PSFCH resources are PSFCH resources in the next beam sweeping resource group.

Correspondingly, the second terminal sends a beam report on the PSFCH corresponding to a target beam sweeping resource among the first M (M=4) beam sweeping resources within the last ceil (M/m) slots, where the RSRP measurement value of the reference signal of the beam sweeping channel received by the second terminal on the target beam sweeping resource is the highest and is higher than a threshold, or the RSRP measurement value of the reference signal of the beam sweeping channel received by the second terminal on the target beam sweeping resource is higher than a threshold.

In some embodiments of the present application, referring to Fig. 29, Fig. 29 illustrates another schematic diagram of the PSFCH time-domain position for the embodiment shown in Fig.19. As shown in Fig. 29, assuming that a configured offset value of the PSFCH is 1, starting from the second slot (offset value 1+ceil (N/m)) corresponding to each beam sweeping resource group, one or more slots exist and contain at least M PSFCH time-domain resources. The first/second/third/fourth resource among the first M beam sweeping resources within the last ceil (M/m) slots in the beam sweeping resource group indicated by the arrows in Fig. 29 are in one-to-one correspondence with PSFCH1/PSFCH2/PSFCH3/PSFCH4 in the next beam sweeping resource group.

### Embodiment 2

As shown in Fig. 31, Embodiment 2 of the present application provides a method for beam sweeping, applied to a second terminal, specifically including the following steps:
Step 201: Determine a type of a beam sweeping resource group from a first resource pool according to configured or pre-configured information, where the number of beam sweeping resources included in the beam sweeping resource group is related to M and N, M is the configured or pre-configured number of transmitting beam directions, and N is the configured or pre-configured number of receiving beam directions.
Step 202: Receive a beam sweeping channel sent by a first terminal according to the type of the beam sweeping resource group.

In some embodiments of the present application, since the number of the beam sweeping resources included in a target beam sweeping resource group is related to M and N, M is the configured or pre-configured number of transmitting beam directions, and N is the configured or pre-configured number of receiving beam directions, by sending the beam sweeping channel on the target beam sweeping resource group through the first terminal, beam sweeping can be performed by the second terminal or the first terminal, and through the beam sweeping, beam pairing for the terminals in a millimeter-wave frequency band can be supported, and data transmission is performed using directional beams, which is applicable to the millimeter-wave communication technology for a sidelink.

It should be noted that Embodiment 2 of the present application is a counterpart claim corresponding to Embodiment 1, the above-mentioned related explanation for the first terminal side is applicable to the second terminal, and in order to avoid repetition, details are not provided herein.

In some embodiments of the present application, the configured or pre-configured information includes at least one of the following:
time-domain configuration information of the beam sweeping resources;
frequency-domain configuration information of the beam sweeping resources;
a reservation period of the beam sweeping resources;
sequence ID information and sequence type information of a reference signal of the beam sweeping channel;
the number M of transmitting beam directions;
the number N of receiving beam directions;
a beam sweeping resource group ID set;
a time-domain offset value of the beam sweeping resource group;
a beam sweeping method indication;
a beam switching capability indication;
a configuration period of a physical sidelink feedback channel (PSFCH);
a configured offset value of the PSFCH;
frequency-domain configuration information of the first resource pool;
time-domain configuration information of the first resource pool.

In some embodiments of the present application, the beam sweeping resource group is one of the following types:
a first type, where according to the first type, the beam sweeping resource group includes M×N slots, and only one beam sweeping resource is contained within a single slot in the time domain;
a second type, where according to the second type, the beam sweeping resource group includes X slots, and a single slot in the time domain includes m beam sweeping resources, X=ceil (M×N/m), and m is determined according to the time-domain configuration information of the beam sweeping resources.

In some embodiments of the present application, the step of determining a type of a beam sweeping resource group from a first resource pool according to configured or pre-configured information includes:
acquiring a beam switching capability indication according to the configured or pre-configured information;
determining that the beam sweeping resource group is of the first type when the beam switching capability indication indicates that the first terminal does not support beam switching within a single slot; and
determining that the beam sweeping resource group is of the second type when the beam switching capability indication indicates that the first terminal supports beam switching within a single slot.

In some embodiments of the present application, the step of receiving a beam sweeping channel sent by a first terminal according to the type of the beam sweeping resource group includes:
receiving the beam sweeping channel by using a fifth method or a sixth method in a case where the beam sweeping resource group is of the first type; and
receiving the beam sweeping channel by using a seventh method or an eighth method in a case where the beam sweeping resource group is of the second type.

The fifth method includes: dividing the beam sweeping resources across every M consecutive slots into one resource subset, and on the beam sweeping resources within each resource subset, receiving the beam sweeping channel using the same beam direction.

The sixth method includes: dividing the beam sweeping resources across every N consecutive slots into one resource subset, and on the beam sweeping resources within each resource subset, receiving the beam sweeping channel using different beam directions.

The seventh method includes: dividing every M consecutive beam sweeping resources in the time domain into one resource subset, and on the beam sweeping resources within each resource subset, receiving the beam sweeping channel using the same beam direction.

The eighth method includes: dividing every N consecutive beam sweeping resources in the time domain into one resource subset, and on the beam sweeping resources within each resource subset, receiving the beam sweeping channel using different beam directions.

In some embodiments of the present application, referring to Fig.13, Fig. 13 illustrates the schematic diagram of the beam sweeping resource group of the first type and sending the beam sweeping channel using the first method. M and N are both 4, that is, the first terminal includes four transmitting beams a1, a2, a3 and a4 in different directions, and the second terminal includes four receiving beams b1, b2, b3, and b4 in different directions. On a first terminal side, the beam sweeping resources across every four consecutive slots are divided into one resource subset, and on the beam sweeping resources within each resource subset, the beam sweeping channel is sent by using different beam directions (a1, a2, a3, and a4). Correspondingly, on a second terminal side, the beam sweeping resources across every four consecutive slots are divided into one resource subset, and on the beam sweeping resources within each resource subset, the beam sweeping channel is received using the same beam direction (b1, b2, b3, or b4).

In some embodiments of the present application, referring to Fig. 14, Fig. 14 illustrates the schematic diagram of the beam sweeping resource group of the first type and sending the beam sweeping channel using the second method. M and N are both 4, that is, the first terminal includes four transmitting beams a1, a2, a3, and a4 in different directions, and the second terminal includes four receiving beams b1, b2, b3, and b4 in different directions. On the first terminal side, the beam sweeping resources across every four consecutive slots are divided into one resource subset, and on the beam sweeping resources within each resource subset, the beam sweeping channel is sent by using the same beam direction (a1, a2, a3, or a4). Correspondingly, on the second terminal side, the beam sweeping resources across every four consecutive slots are divided into one resource subset, and on the beam sweeping resources within each resource subset, the beam sweeping channel is received using different beam directions (b1, b2, b3, and b4).

In some embodiments of the present application, referring to Fig. 15, Fig. 15 illustrates the schematic diagram of the beam sweeping resource group of the second type and sending the beam sweeping channel using the third method. M and N are both 4, that is, the first terminal includes four transmitting beams a1, a2, a3, and a4 in different directions, and the second terminal includes four receiving beams b1, b2, b3, and b4 in different directions. On the first terminal side, every four consecutive beam sweeping resources in the time domain are divided into one resource subset, and on the beam sweeping resources within each resource subset, the beam sweeping channel is sent by using different beam directions (a1, a2, a3, and a4) or the reference signal in the beam sweeping channel is sent by using different beam directions. Correspondingly, on the second terminal side, every four consecutive beam sweeping resources in the time domain are divided into one resource subset, and on the beam sweeping resources within each resource subset, the beam sweeping channel is received using the same beam direction (b1, b2, b3, or b4).

In some embodiments of the present application, referring to Fig. 16, Fig. 16 illustrates the schematic diagram of the beam sweeping resource group of the second type and sending the beam sweeping channel using the fourth method. M and N are both 4, that is, the first terminal includes four transmitting beams a1, a2, a3, and a4 in different directions, and the second terminal includes four receiving beams b1, b2, b3, and b4 in different directions. On the first terminal side, every four consecutive beam sweeping resources in the time domain are divided into one resource subset, and on the beam sweeping resources within each resource subset, the beam sweeping channel is sent by using the same beam direction (a1, a2, a3, or a4) or the reference signal in the beam sweeping channel is sent by using the same beam direction. Correspondingly, on the second terminal side, every four consecutive beam sweeping resources in the time domain are divided into one resource subset, and on the beam sweeping resources within each resource subset, the beam sweeping channel is received using different beam directions (b1, b2, b3, and b4).

In some embodiments of the present application, referring to Fig. 17, Fig. 17 illustrates the schematic diagram of the beam sweeping resource group of the second type and sending the beam sweeping channel using the third method. M is 3, and N is 5, that is, the first terminal includes three transmitting beams a1, a2, and a3 in different directions, and the second terminal includes five receiving beams b1, b2, b3, b4, and b5 in different directions. On the first terminal side, every three consecutive beam sweeping resources in the time domain are divided into one resource subset, and on the beam sweeping resources within each resource subset, the beam sweeping channel is sent by using different beam directions (a1, a2, and a3) or the reference signal in the beam sweeping channel is sent by using different beam directions. Correspondingly, on the second terminal side, every three consecutive beam sweeping resources in the time domain are divided into one resource subset, and on the beam sweeping resources within each resource subset, the beam sweeping channel is received using the same beam direction (b1, b2, b3, b4, or b5).

In some embodiments of the present application, referring to Fig. 18, Fig. 18 illustrates the schematic diagram of the beam sweeping resource group of the second type and sending the beam sweeping channel using the fourth method. M is 3, and N is 5, that is, the first terminal includes three transmitting beams a1, a2, and a3 in different directions, and the second terminal includes five receiving beams b1, b2, b3, b4, and b5 in different directions. On the first terminal side, every five consecutive beam sweeping resources in the time domain are divided into one resource subset, and on the beam sweeping resources within each resource subset, the beam sweeping channel is sent by using the same beam direction (a1, a2, or a3) or the reference signal in the beam sweeping channel is sent by using the same beam direction. Correspondingly, on the second terminal side, every five consecutive beam sweeping resources in the time domain are divided into one resource subset, and on the beam sweeping resources within each resource subset, the beam sweeping channel is received using different beam directions (b1, b2, b3, b4, and b5).

In some embodiments of the present application, the above-mentioned method for beam sweeping further includes the following steps:
in the fifth method or the seventh method, if the number of beam directions supported by the second terminal is greater than or equal to N, the N beam directions supported by the second terminal are in one-to-one correspondence with N resource subsets;
in the fifth method or the seventh method, if the number of beam directions supported by the second terminal is less than N, each beam direction supported by the second terminal corresponds to at least one of the N resource subsets;
in the sixth method, if the number of beam directions supported by the second terminal is greater than or equal to N, the N beam directions supported by the second terminal are in one-to-one correspondence with the beam sweeping resources across the N consecutive slots;
in the sixth method, if the number of beam directions supported by the second terminal is less than N, each beam direction supported by the second terminal corresponds to at least one of the beam sweeping resources across the N consecutive slots;
in the eighth method, if the number of beam directions supported by the second terminal is greater than or equal to N, the N beam directions supported by the second terminal are in one-to-one correspondence with the N consecutive beam sweeping resources; and
in the eighth method, if the number of beam directions supported by the second terminal is less than N, each beam direction supported by the second terminal corresponds to at least one of the N consecutive beam sweeping resources.

In some embodiments of the present application, the receiving the beam sweeping channel by using a fifth method or a sixth method in a case where the beam sweeping resource group is of the first type includes:
acquiring a beam sweeping method indication according to the configured or pre-configured information;
receiving the beam sweeping channel by using the fifth method in a case where the beam sweeping resource group is of the first type and the beam sweeping method indication indicates transmitting beam sweeping; and
receiving the beam sweeping channel by using the sixth method in a case where the beam sweeping resource group is of the first type and the beam sweeping method indication indicates receiving beam sweeping.

During specific implementation, in a case where the beam sweeping resource group is of the first type, when the beam sweeping method indication is the third value, it indicates transmitting beam sweeping, and the beam sweeping channel is sent by using the fifth method; and when the beam sweeping method indication is the fourth value, it indicates transmitting beam sweeping, and the beam sweeping channel is sent by using the sixth method.

In some embodiments of the present application, the receiving the beam sweeping channel by using a seventh method or an eighth method in a case where the beam sweeping resource group is of the second type includes:
acquiring a beam sweeping method indication according to the configured or pre-configured information;
receiving the beam sweeping channel by using the seventh method in a case where the beam sweeping resource group is of the second type and the beam sweeping method indication indicates transmitting beam sweeping; and
receiving the beam sweeping channel by using the eighth method in a case where the beam sweeping resource group is of the second type and the beam sweeping method indication indicates receiving beam sweeping.

During specific implementation, in a case where the beam sweeping resource group is of the second type, when the beam sweeping method indication is the third value, it indicates transmitting beam sweeping, and the beam sweeping channel is sent by using the seventh method; and when the beam sweeping method indication is the fourth value, it indicates transmitting beam sweeping, and the beam sweeping channel is sent by using the eighth method.

In some embodiments of the present application, the method further includes:
sending a beam measurement report on the PSFCH corresponding to a target beam sweeping resource in the target beam sweeping resource group when the beam sweeping channel sent by the first terminal is received on the target beam sweeping resource group, where the beam measurement report is obtained according to beam measurements performed upon receiving the beam sweeping channel.

The target beam sweeping resource satisfies at least one of the following conditions:
an RSRP measurement value of the beam sweeping channel received on the target beam sweeping resource is a maximum RSRP among beam sweeping channels received in the beam sweeping resource group; and
the RSRP measurement value of the beam sweeping channel received on the target beam sweeping resource is greater than a second threshold value.

In some embodiments of the present application, the sending a beam measurement report on the PSFCH corresponding to a target beam sweeping resource in the target beam sweeping resource group includes:
sending the beam measurement report using a second beam on the PSFCH corresponding to the target beam sweeping resource,
where the second beam includes a beam used to receive the beam sweeping channel on the target beam sweeping resource.

Every M consecutive beam sweeping resources within the beam sweeping resource group are divided into one resource subset, and the beam sweeping resource in each resource subset corresponds to one PSFCH time-domain resource. Alternatively, every N consecutive beam sweeping resources within the beam sweeping resource group are divided into one resource subset, with one PSFCH time-domain resource corresponding to one beam sweeping resource in each resource subset.

In some embodiments of the present application, a slot position where the PSFCH is located is related to the configured offset value of the PSFCH and M.

For a specific explanation of the embodiment, reference may be made to the explanation of Fig. 21 to Fig. 29 in Embodiment 1, and in order to avoid repetition, details are not provided herein.

### Embodiment 3

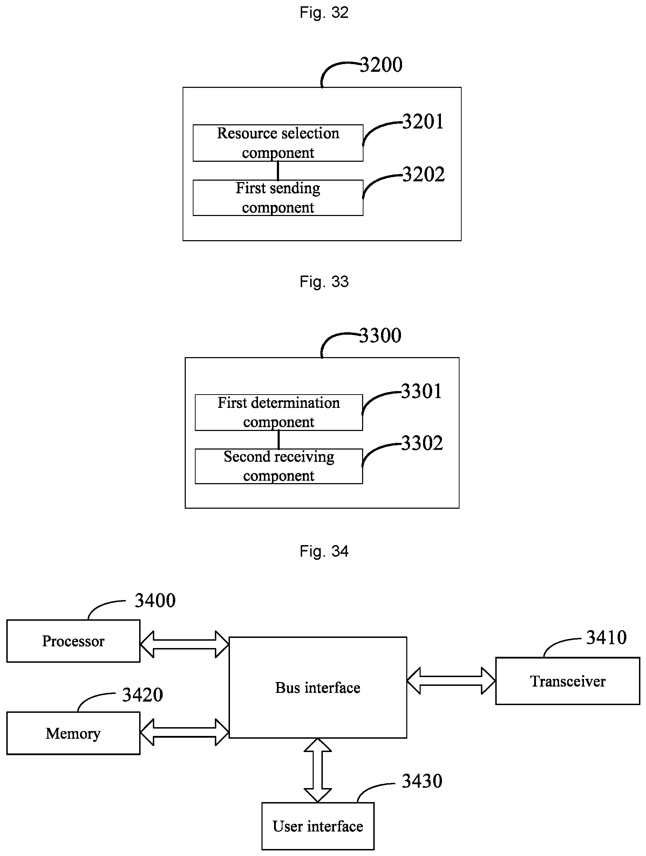

As shown in Fig. 32, embodiments of the present application provide an apparatus for beam sweeping 3200, applied to a first terminal, including:
a resource selection component 3201, configured to select a target beam sweeping resource group from a first resource pool according to configured or pre-configured information, where the number of beam sweeping resources included in the target beam sweeping resource group is related to M and N, M is the configured or pre-configured number of transmitting beam directions, and N is the configured or pre-configured number of receiving beam directions; and
a first sending component 3202, configured to send a beam sweeping channel on the target beam sweeping resource group.

In some embodiments of the present application, the beam sweeping channel includes:
a physical sidelink control channel and a reference signal; or
a physical sidelink control channel, a reference signal, and a physical sidelink shared channel.

In some embodiments of the present application, the physical sidelink control channel and/or the physical sidelink shared channel are used to carry at least one of the following information:
a source identifier;
a destination identifier;
application service information;
application ID;
beam sweeping resource group ID;
beam ID;
time-frequency indication information;
reference signal indication information;
beam measurement assistance information.

In some embodiments of the present application, the configured or pre-configured information includes at least one of the following:
time-domain configuration information of the beam sweeping resources;
frequency-domain configuration information of the beam sweeping resources;
a reservation period of the beam sweeping resources;
sequence ID information and sequence type information of the reference signal of the beam sweeping channel;
the number M of transmitting beam directions;
the number N of receiving beam directions;
a beam sweeping resource group ID set;
a time-domain offset value of the beam sweeping resource group;
a beam sweeping method indication;
a beam switching capability indication;
a configuration period of a physical sidelink feedback channel (PSFCH);
a configured offset value of the PSFCH;
frequency-domain configuration information of the first resource pool;
time-domain configuration information of the first resource pool.

In some embodiments of the present application, the above-mentioned apparatus 3200 further includes:
a configured information determination component, configured to determine a type of the beam sweeping resource group included in the first resource pool according to the configured or pre-configured information.

The type of the beam sweeping resource group is a first type or a second type.

According to the first type, the beam sweeping resource group includes M×N slots, and only one beam sweeping resource is contained within a single slot in the time domain.

According to the second type, the beam sweeping resource group includes X slots, and a single slot in the time domain includes m beam sweeping resources, where X=ceil (M×N/m), and m is determined according to the time-domain configuration information of the beam sweeping resources.

In some embodiments of the present application, the configured information determination component includes:
a first determination unit, configured to acquire a beam switching capability indication according to the configured or pre-configured information;
a second determination unit, configured to determine that the beam sweeping resource group included in the first resource pool is of the first type when the beam switching capability indication indicates that the first terminal does not support beam switching within a single slot; and
a third determination unit, configured to determine that the beam sweeping resource group included in the first resource pool is of the second type when the beam switching capability indication indicates that the first terminal supports beam switching within a single slot.

In some embodiments of the present application, the first sending component 3201 includes:
a first sending subcomponent, configured to send the beam sweeping channel by using a first method or a second method in a case where the target beam sweeping resource group is of the first type; and
a second sending subcomponent, configured to send the beam sweeping channel by using a third method or a fourth method in a case where the target beam sweeping resource group is of the second type.

The first method includes: dividing the beam sweeping resources across every M consecutive slots into one resource subset, and on the beam sweeping resources within each resource subset, sending the beam sweeping channel using different beam directions.

The second method includes: dividing the beam sweeping resources across every N consecutive slots into one resource subset, and on the beam sweeping resources within each resource subset, sending the beam sweeping channel using the same beam direction.

The third method includes: dividing every M consecutive beam sweeping resources in the time domain into one resource subset, and on the beam sweeping resources within each resource subset, sending the beam sweeping channel using different beam directions, or sending the reference signal in the beam sweeping channel using different beam directions.

The fourth method includes: dividing every N consecutive beam sweeping resources in the time domain into one resource subset, and on the beam sweeping resources within each resource subset, sending the beam sweeping channel using the same beam direction, or sending the reference signal in the beam sweeping channel using the same beam direction.

In some embodiments of the present application, the apparatus 3200 further includes:
a first processing component, configured to, when the beam sweeping channel is sent by using the third method, and on the beam sweeping resources within each resource subset, the reference signal in the beam sweeping channel is sent by using different beam directions, ensure that within a single slot, beams of the physical sidelink control channel sending the beam sweeping channel include the beam directions for sending the reference signal in the beam sweeping channel within the slot; and
a second processing component, configured to, when the beam sweeping channel is sent by using the fourth method, and on the beam sweeping resources within each resource subset, the reference signal in the beam sweeping channel is sent by using the same beam direction, ensure that within a single slot, the beams of the physical sidelink control channel sending the beam sweeping channel include the beam direction for sending the reference signal in the beam sweeping channel within the slot.

In some embodiments of the present application, in the first method, if the number of beam directions supported by the first terminal is greater than or equal to M, the M beam directions supported by the first terminal are in one-to-one correspondence with the beam sweeping resources across the M consecutive slots. a

In the first method, if the number of beam directions supported by the first terminal is less than M, each beam direction supported by the first terminal corresponds to at least one of the beam sweeping resources across the M consecutive slots.

In the third method, if the number of beam directions supported by the first terminal is greater than or equal to M, the M beam directions supported by the first terminal are in one-to-one correspondence with the M consecutive beam sweeping resources.

In the third method, if the number of beam directions supported by the first terminal is less than M, each beam direction supported by the first terminal corresponds to at least one of the M consecutive beam sweeping resources.

In the second method or the fourth method, if the number of beam directions supported by the first terminal is greater than or equal to M, different beam directions are used among different resource subsets; and
in the second method or the fourth method, if the number of beam directions supported by the first terminal is less than M, the number of the beam directions supported by the first terminal is traversed and utilized across at least different resource subsets.

In some embodiments of the present application, the first sending subcomponent includes:
a first sending unit, configured to acquire a beam sweeping method indication according to the configured or pre-configured information;
a second sending unit, configured to send the beam sweeping channel by using the first method in a case where the beam sweeping resource group is of the first type and the beam sweeping method indication indicates transmitting beam sweeping; and
a third sending unit, configured to send the beam sweeping channel by using the second method in a case where the beam sweeping resource group is of the first type and the beam sweeping method indication indicates receiving beam sweeping.

In some embodiments of the present application, the second sending subcomponent includes:
a fourth sending unit, configured to acquire a beam sweeping method indication according to the configured or pre-configured information;
a fifth sending unit, configured to send the beam sweeping channel by using the third method in a case where the beam sweeping resource group is of the second type and the beam sweeping method indication indicates transmitting beam sweeping; and
a sixth sending unit, configured to send the beam sweeping channel by using the fourth method in a case where the beam sweeping resource group is of the second type and the beam sweeping method indication indicates receiving beam sweeping.

In some embodiments of the present application, the resource selection component 3201 includes:
a first resource selection subcomponent, configured to exclude a first beam sweeping resource group from a candidate beam sweeping resource group set included in the first resource pool according to the configured or pre-configured information and sensing information, to obtain an available candidate beam sweeping resource group set; and
a second resource selection subcomponent, configured to select the target beam sweeping resource group according to the available candidate beam sweeping resource group set.

In some embodiments of the present application, the sensing information includes at least one of the following:
frequency-domain information of beam sweeping resources occupied by a third terminal;
time-domain information of the beam sweeping resources occupied by the third terminal;
a transmission priority value of a beam sweeping channel sent by the third terminal;
an ID of beam sweeping resource group occupied by the third terminal;
a reservation period of the beam sweeping resources of the third terminal;
a reference signal received power (RSRP) measurement value of a reference signal sent by the third terminal.

In some embodiments of the present application, the first beam sweeping resource group satisfies the following conditions:
The first beam sweeping resource group or a periodically reserved resource group associated with the first beam sweeping resource group overlaps with a second beam sweeping resource group; and the second beam sweeping resource group includes: a beam sweeping resource group occupied by the third terminal or a periodically reserved resource group associated with the beam sweeping resource group occupied by the third terminal.

The third terminal satisfies at least one of the following conditions:
the highest RSRP measurement value among RSRP measurement values of reference signals sent by the third terminal within the occupied beam sweeping resource group is higher than a first threshold value; and
the transmission priority value of the beam sweeping channel sent by the third terminal is higher than that of the beam sweeping channel of the first terminal.

In some embodiments of the present application, the apparatus 3200 further includes:
a first receiving component, configured to receive, on a physical sidelink feedback channel (PSFCH) time-domain resource corresponding to the beam sweeping resource within the target beam sweeping resource group, a beam measurement report sent by the second terminal through a first beam,
where every N consecutive beam sweeping resources within the target beam sweeping resource group are divided into one resource subset, the beam sweeping resource in each resource subset corresponds to one PSFCH time-domain resource, and the first beam refers to a beam used to send the beam sweeping channel on the beam sweeping resource corresponding to the PSFCH time-domain resource;
alternatively, every M consecutive beam sweeping resources within the target beam sweeping resource group are divided into one resource subset, with one PSFCH time-domain resource corresponding to one beam sweeping resource in each resource subset, and the first beam includes a beam used to send the beam sweeping channel on the beam sweeping resource corresponding to the PSFCH time-domain resource.

In some embodiments of the present application, a slot position where the PSFCH is located is related to the configured offset value of the PSFCH and M.

Embodiment 3 of the present application corresponds to the method in Embodiment 1 described above. All implementation means in Embodiment 1 described above are applicable to the embodiment of the apparatus for beam sweeping, and can also achieve the same technical effects.

### Embodiment 4

As shown in Fig. 33, embodiments of the present application provide an apparatus for beam sweeping 3300, applied to a second terminal, including:
a first determination component 3301, configured to determine a type of a beam sweeping resource group from a first resource pool according to configured or pre-configured information, where the number of beam sweeping resources included in the beam sweeping resource group is related to M and N, M is the configured or pre-configured number of transmitting beam directions, and N is the configured or pre-configured number of receiving beam directions; and
a second receiving component 3302, configured to receive a beam sweeping channel sent by a first terminal according to the type of the beam sweeping resource group.

In some embodiments of the present application, the configured or pre-configured information includes at least one of the following:
time-domain configuration information of the beam sweeping resources;
frequency-domain configuration information of the beam sweeping resources;
a reservation period of the beam sweeping resources;
sequence ID information and sequence type information of a reference signal of the beam sweeping channel;
the number M of transmitting beam directions;
the number N of receiving beam directions;
a beam sweeping resource group ID set;
a time-domain offset value of the beam sweeping resource group;
a beam sweeping method indication;
a beam switching capability indication;
a configuration period of a physical sidelink feedback channel (PSFCH);
a configured offset value of the PSFCH;
frequency-domain configuration information of the first resource pool;
time-domain configuration information of the first resource pool.

In some embodiments of the present application, the beam sweeping resource group is one of the following types:
a first type, where according to the first type, the beam sweeping resource group includes M×N slots, and only one beam sweeping resource is contained within a single slot in the time domain;
a second type, where according to the second type, the beam sweeping resource group includes X slots, and a single slot in the time domain includes m beam sweeping resources, X=ceil (M×N/m), and m is determined according to the time-domain configuration information of the beam sweeping resources.

In some embodiments of the present application, the first determination component 3301 includes:
a first determination subcomponent, configured to acquire a beam switching capability indication according to the configured or pre-configured information;
a second determination subcomponent, configured to determine that the beam sweeping resource group is of the first type when the beam switching capability indication indicates that the first terminal does not support beam switching within a single slot; and
a third determination subcomponent, configured to determine that the beam sweeping resource group is of the second type when the beam switching capability indication indicates that the first terminal supports beam switching within a single slot.

In some embodiments of the present application, the second receiving component 3302 includes:
a first receiving subcomponent, configured to receive the beam sweeping channel by using a fifth method or a sixth method in a case where the beam sweeping resource group is of the first type; and
a second receiving subcomponent, configured to receive the beam sweeping channel by using a seventh method or an eighth method in a case where the beam sweeping resource group is of the second type.

The fifth method includes: dividing the beam sweeping resources across every M consecutive slots into one resource subset, and on the beam sweeping resources within each resource subset, receiving the beam sweeping channel using the same beam direction.

The sixth method includes: dividing the beam sweeping resources across every N consecutive slots into one resource subset, and on the beam sweeping resources within each resource subset, receiving the beam sweeping channel using different beam directions.

The seventh method includes: dividing every M consecutive beam sweeping resources in the time domain into one resource subset, and on the beam sweeping resources within each resource subset, receiving the beam sweeping channel using the same beam direction.

The eighth method includes: dividing every N consecutive beam sweeping resources in the time domain into one resource subset, and on the beam sweeping resources within each resource subset, receiving the beam sweeping channel using different beam directions.

In some embodiments of the present application, in the fifth method or the seventh method, if the number of beam directions supported by the second terminal is greater than or equal to N, the N beam directions supported by the second terminal are in one-to-one correspondence with N resource subsets;
in the fifth method or the seventh method, if the number of beam directions supported by the second terminal is less than N, each beam direction supported by the second terminal corresponds to at least one of the N resource subsets;
in the sixth method, if the number of beam directions supported by the second terminal is greater than or equal to N, the N beam directions supported by the second terminal are in one-to-one correspondence with the beam sweeping resources across the N consecutive slots;
in the sixth method, if the number of beam directions supported by the second terminal is less than N, each beam direction supported by the second terminal corresponds to at least one of the beam sweeping resources across the N consecutive slots;
in the eighth method, if the number of beam directions supported by the second terminal is greater than or equal to N, the N beam directions supported by the second terminal are in one-to-one correspondence with the N consecutive beam sweeping resources; and
in the eighth method, if the number of beam directions supported by the second terminal is less than N, each beam direction supported by the second terminal corresponds to at least one of the N consecutive beam sweeping resources.

In some embodiments of the present application, the first receiving subcomponent includes:
a first receiving unit, configured to acquire a beam sweeping method indication according to the configured or pre-configured information;
a second receiving unit, configured to receive the beam sweeping channel by using the fifth method in a case where the beam sweeping resource group is of the first type and the beam sweeping method indication indicates transmitting beam sweeping; and
a third receiving unit, configured to receive the beam sweeping channel by using the sixth method in a case where the beam sweeping resource group is of the first type and the beam sweeping method indication indicates receiving beam sweeping.

In some embodiments of the present application, the second receiving subcomponent includes:
a fourth receiving unit, configured to acquire a beam sweeping method indication according to the configured or pre-configured information;
a fifth receiving unit, configured to receive the beam sweeping channel by using the seventh method in a case where the beam sweeping resource group is of the second type and the beam sweeping method indication indicates transmitting beam sweeping; and
a sixth receiving unit, configured to receive the beam sweeping channel by using the eighth method in a case where the beam sweeping resource group is of the second type and the beam sweeping method indication indicates receiving beam sweeping.

In some embodiments of the present application, the apparatus 3300 further includes:
a second sending component, configured to send a beam measurement report on a PSFCH corresponding to a target beam sweeping resource in a target beam sweeping resource group when the beam sweeping channel sent by the first terminal is received on the target beam sweeping resource group, where the beam measurement report is obtained according to beam measurements performed upon receiving the beam sweeping channel.

The target beam sweeping resource satisfies at least one of the following conditions:
an RSRP measurement value of the beam sweeping channel received on the target beam sweeping resource is a maximum RSRP among beam sweeping channels received in the beam sweeping resource group; and
the RSRP measurement value of the beam sweeping channel received on the target beam sweeping resource is greater than a second threshold value.

In some embodiments of the present application, the second sending component includes:
a first sending subcomponent, configured to send the beam measurement report using a second beam on the PSFCH corresponding to the target beam sweeping resource,
where the second beam includes a beam used to receive the beam sweeping channel on the target beam sweeping resource.

Every M consecutive beam sweeping resources within the beam sweeping resource group are divided into one resource subset, and the beam sweeping resource in each resource subset corresponds to one PSFCH time-domain resource. Alternatively, every N consecutive beam sweeping resources within the beam sweeping resource group are divided into one resource subset, with one PSFCH time-domain resource corresponding to one beam sweeping resource in each resource subset.

In some embodiments of the present application, a slot position where the PSFCH is located is related to the configured offset value of the PSFCH and M.

The apparatus for beam sweeping 3300 is an apparatus corresponding to the method in Embodiment 2 described above. All implementation means in the above-mentioned method embodiments are applicable to the embodiment of the apparatus for beam sweeping, and can also achieve the same technical effects.

### Embodiment 5

To better achieve the above-mentioned objective, as shown in Fig. 34, Embodiment 4 of the present application further provides a first terminal, including:
a processor 3400; and a memory 3420 connected to the processor 3400 through a bus interface. The memory 3420 is configured to store a program and data used by the processor 3400 when performing operations, and the processor 3400 calls and executes the program and the data stored in the memory 3420.

A transceiver 3410 is connected to the bus interface for receiving and sending the data under the control of the processor 3400. The processor 3400 is configured to read the program in the memory 3420 to implement the following steps:
selecting a target beam sweeping resource group from a first resource pool according to configured or pre-configured information, where the number of beam sweeping resources included in the target beam sweeping resource group is related to M and N, M is the configured or pre-configured number of transmitting beam directions, and N is the configured or pre-configured number of receiving beam directions; and
sending a beam sweeping channel on the target beam sweeping resource group.

**In** Fig. 34, a bus architecture may include any number of interconnected buses and bridges, which are specifically linked together by various circuits of one or more processors represented by the processor 3400 and a memory represented by the memory 3420. The bus architecture may also link various other circuits such as a peripheral device, a voltage regulator, and a power management circuit, which are well known in the art, and therefore are not further described herein. The bus interface provides an interface. The transceiver 3410 may include a plurality of elements, namely including a transmitter and a receiver, and providing a unit configured to communicate with various other apparatuses on a transmission medium. For different terminals, a user interface 3430 may also be an interface capable of externally and internally connecting required devices, and connected devices include, but are not limited to, a keypad, a display, a speaker, a microphone, a joystick, and the like. The processor 3400 is responsible for managing the bus architecture and general processing, and the memory 3420 may store the data used by the processor 3400 when performing the operations.

**In** some embodiments of the present application, the beam sweeping channel includes:
a physical sidelink control channel and a reference signal; or
a physical sidelink control channel, a reference signal, and a physical sidelink shared channel.

**In** some embodiments of the present application, the physical sidelink control channel and/or the physical sidelink shared channel are used to carry at least one of the following information:
a source identifier;
a destination identifier;
application service information;
application ID;
beam sweeping resource group ID;
beam ID;
time-frequency indication information;
reference signal indication information;
beam measurement assistance information.

In some embodiments of the present application, the configured or pre-configured information includes at least one of the following:
time-domain configuration information of the beam sweeping resources;
frequency-domain configuration information of the beam sweeping resources;
a reservation period of the beam sweeping resources;
sequence ID information and sequence type information of the reference signal of the beam sweeping channel;
the number M of transmitting beam directions;
the number N of receiving beam directions;
a beam sweeping resource group ID set;
a time-domain offset value of the beam sweeping resource group;
a beam sweeping method indication;
a beam switching capability indication;
a configuration period of a physical sidelink feedback channel (PSFCH);
a configured offset value of the PSFCH;
frequency-domain configuration information of the first resource pool;
time-domain configuration information of the first resource pool.

In some embodiments of the present application, the processor 3400 is configured to read the program in the memory 3420 to implement the following steps:
determining a type of the beam sweeping resource group included in the first resource pool according to the configured or pre-configured information.

The type of the beam sweeping resource group is a first type or a second type.

According to the first type, the beam sweeping resource group includes M×N slots, and only one beam sweeping resource is contained within a single slot in the time domain.

According to the second type, the beam sweeping resource group includes X slots, and a single slot in the time domain includes m beam sweeping resources, where X=ceil (M×N/m), and m is determined according to the time-domain configuration information of the beam sweeping resources.

**In** some embodiments of the present application, the processor 3400 is configured to read the program in the memory 3420 to implement the following steps:
acquiring a beam switching capability indication according to the configured or pre-configured information;
determining that the beam sweeping resource group included in the first resource pool is of the first type when the beam switching capability indication indicates that the first terminal does not support beam switching within a single slot; and
determining that the beam sweeping resource group included in the first resource pool is of the second type when the beam switching capability indication indicates that the first terminal supports beam switching within a single slot.

**In** some embodiments of the present application, the processor 3400 is configured to read the program in the memory 3420 to implement the following steps:
sending the beam sweeping channel by using a first method or a second method in a case where the target beam sweeping resource group is of the first type; and
sending the beam sweeping channel by using a third method or a fourth method in a case where the target beam sweeping resource group is of the second type.

The first method includes: dividing the beam sweeping resources across every M consecutive slots into one resource subset, and on the beam sweeping resources within each resource subset, sending the beam sweeping channel using different beam directions.

The second method includes: dividing the beam sweeping resources across every N consecutive slots into one resource subset, and on the beam sweeping resources within each resource subset, sending the beam sweeping channel using the same beam direction.

The third method includes: dividing every M consecutive beam sweeping resources in the time domain into one resource subset, and on the beam sweeping resources within each resource subset, sending the beam sweeping channel using different beam directions, or sending the reference signal in the beam sweeping channel using different beam directions.

The fourth method includes: dividing every N consecutive beam sweeping resources in the time domain into one resource subset, and on the beam sweeping resources within each resource subset, sending the beam sweeping channel using the same beam direction, or sending the reference signal in the beam sweeping channel using the same beam direction.

**In** some embodiments of the present application, the processor 3400 is configured to read the program in the memory 3420 to implement the following steps:
when the beam sweeping channel is sent by using the third method, and on the beam sweeping resources within each resource subset, the reference signal in the beam sweeping channel is sent by using different beam directions, within a single slot, beams for sending the physical sidelink control channel of the beam sweeping channel include the beam directions for sending the reference signal in the beam sweeping channel within the slot; and
when the beam sweeping channel is sent by using the fourth method, and on the beam sweeping resources within each resource subset, the reference signal in the beam sweeping channel is sent by using the same beam direction, within a single slot, the beams of the physical sidelink control channel sending the beam sweeping channel include the beam direction for sending the reference signal in the beam sweeping channel within the slot.

In some embodiments of the present application, the processor 3400 is configured to read the program in the memory 3420 to implement the following steps:
in the first method, if the number of beam directions supported by the first terminal is greater than or equal to M, the M beam directions supported by the first terminal are in one-to-one correspondence with the beam sweeping resources across the M consecutive slots;
in the first method, if the number of beam directions supported by the first terminal is less than M, each beam direction supported by the first terminal corresponds to at least one of the beam sweeping resources across the M consecutive slots;
in the third method, if the number of beam directions supported by the first terminal is greater than or equal to M, the M beam directions supported by the first terminal are in one-to-one correspondence with the M consecutive beam sweeping resources; and
in the third method, if the number of beam directions supported by the first terminal is less than M, each beam direction supported by the first terminal corresponds to at least one of the M consecutive beam sweeping resources.

In the second method or the fourth method, if the number of beam directions supported by the first terminal is greater than or equal to M, different beam directions are used among different resource subsets; and
in the second method or the fourth method, if the number of beam directions supported by the first terminal is less than M, the number of the beam directions supported by the first terminal is traversed and utilized across at least different resource subsets.

In some embodiments of the present application, the processor 3400 is configured to read the program in the memory 3420 to implement the following steps:
acquiring a beam sweeping method indication according to the configured or pre-configured information;
sending the beam sweeping channel by using the first method in a case where the beam sweeping resource group is of the first type and the beam sweeping method indication indicates transmitting beam sweeping; and
sending the beam sweeping channel by using the second method in a case where the beam sweeping resource group is of the first type and the beam sweeping method indication indicates receiving beam sweeping.

In some embodiments of the present application, the processor 3400 is configured to read the program in the memory 3420 to implement the following steps:
acquiring a beam sweeping method indication according to the configured or pre-configured information;
sending the beam sweeping channel by using the third method in a case where the beam sweeping resource group is of the second type and the beam sweeping method indication indicates transmitting beam sweeping; and
sending the beam sweeping channel by using the fourth method in a case where the beam sweeping resource group is of the second type and the beam sweeping method indication indicates receiving beam sweeping.

In some embodiments of the present application, the processor 3400 is configured to read the program in the memory 3420 to implement the following steps:
excluding a first beam sweeping resource group from a candidate beam sweeping resource group set included in the first resource pool according to the configured or pre-configured information and sensing information, to obtain an available candidate beam sweeping resource group set; and
selecting a target beam sweeping resource group according to the available candidate beam sweeping resource group set.

In some embodiments of the present application, the sensing information includes at least one of the following:
frequency-domain information of beam sweeping resources occupied by a third terminal;
time-domain information of the beam sweeping resources occupied by the third terminal;
a transmission priority value of a beam sweeping channel sent by the third terminal;
an ID of beam sweeping resource group occupied by the third terminal;
a reservation period of the beam sweeping resources of the third terminal;
a reference signal received power (RSRP) measurement value of a reference signal sent by the third terminal.

In some embodiments of the present application, the first beam sweeping resource group satisfies the following conditions:
The first beam sweeping resource group or a periodically reserved resource group associated with the first beam sweeping resource group overlaps with a second beam sweeping resource group; and the second beam sweeping resource group includes: a beam sweeping resource group occupied by the third terminal or a periodically reserved resource group associated with the beam sweeping resource group occupied by the third terminal.

The third terminal satisfies at least one of the following conditions:
the highest RSRP measurement value among RSRP measurement values of reference signals sent by the third terminal within the occupied beam sweeping resource group is higher than a first threshold value; and
the transmission priority value of the beam sweeping channel sent by the third terminal is higher than that of the beam sweeping channel of the first terminal.

In some embodiments of the present application, the processor 3400 is configured to read the program in the memory 3420 to implement the following steps:
receiving, on a physical sidelink feedback channel (PSFCH) time-domain resource corresponding to the beam sweeping resource within the target beam sweeping resource group, a beam measurement report sent by the second terminal through a first beam,
where every N consecutive beam sweeping resources within the target beam sweeping resource group are divided into one resource subset, the beam sweeping resource in each resource subset corresponds to one PSFCH time-domain resource, and the first beam refers to a beam used to send the beam sweeping channel on the beam sweeping resource corresponding to the PSFCH time-domain resource;
alternatively, every M consecutive beam sweeping resources within the target beam sweeping resource group are divided into one resource subset, with one PSFCH time-domain resource corresponding to one beam sweeping resource in each resource subset, and the first beam includes a beam used to send the beam sweeping channel on the beam sweeping resource corresponding to the PSFCH time-domain resource.

In some embodiments of the present application, a slot position where the PSFCH is located is related to the configured offset value of the PSFCH and M.

### Embodiment 6

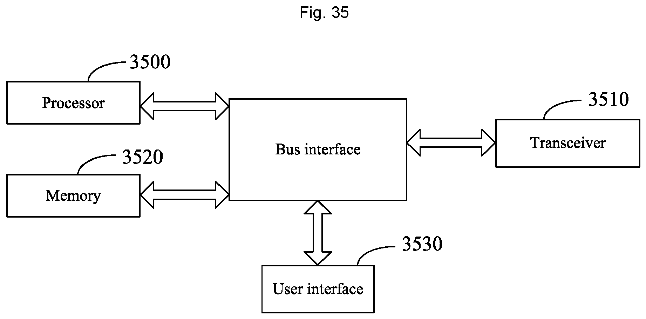

To better achieve the above-mentioned objective, as shown in Fig. 35, Embodiment 6 of the present application further provides a second terminal, including:
a processor 3500; and a memory 3520 connected to the processor 3500 through a bus interface. The memory 3520 is configured to store a program and data used by the processor 3500 when performing operations, and the processor 3500 calls and executes the program and the data stored in the memory 3520.

A transceiver 3510 is connected to the bus interface for receiving and sending the data under the control of the processor 3500. The processor 3500 is configured to read the program in the memory 3520 to implement the following steps:
determining a type of a beam sweeping resource group from a first resource pool according to configured or pre-configured information, where the number of beam sweeping resources included in the beam sweeping resource group is related to M and N, M is the configured or pre-configured number of transmitting beam directions, and N is the configured or pre-configured number of receiving beam directions; and
receiving a beam sweeping channel sent by a first terminal according to the type of the beam sweeping resource group.

In Fig. 35, a bus architecture may include any number of interconnected buses and bridges, which are specifically linked together by various circuits of one or more processors represented by the processor 3500 and a memory represented by the memory 3520. The bus architecture may also link various other circuits such as a peripheral device, a voltage regulator, and a power management circuit, which are well known in the art, and therefore are not further described herein. The bus interface provides an interface. The transceiver 3510 may include a plurality of elements, namely including a transmitter and a receiver, and providing a unit configured to communicate with various other apparatuses on a transmission medium. For different terminals, a user interface 3530 may also be an interface capable of externally and internally connecting required devices, and connected devices include, but are not limited to, a keypad, a display, a speaker, a microphone, a joystick, and the like. The processor 3500 is responsible for managing the bus architecture and general processing, and the memory 3520 may store the data used by the processor 3500 when performing the operations.

In some embodiments of the present application, the configured or pre-configured information includes at least one of the following:
time-domain configuration information of the beam sweeping resources;
frequency-domain configuration information of the beam sweeping resources;
a reservation period of the beam sweeping resources;
sequence ID information and sequence type information of a reference signal of the beam sweeping channel;
the number M of transmitting beam directions;
the number N of receiving beam directions;
a beam sweeping resource group ID set;
a time-domain offset value of the beam sweeping resource group;
a beam sweeping method indication;
a beam switching capability indication;
a configuration period of a physical sidelink feedback channel (PSFCH);
a configured offset value of the PSFCH;
frequency-domain configuration information of the first resource pool;
time-domain configuration information of the first resource pool.

In some embodiments of the present application, the beam sweeping resource group is one of the following types:
a first type, where according to the first type, the beam sweeping resource group includes M×N slots, and only one beam sweeping resource is contained within a single slot in the time domain;
a second type, where according to the second type, the beam sweeping resource group includes X slots, and a single slot in the time domain includes m beam sweeping resources, X=ceil (M×N/m), and m is determined according to the time-domain configuration information of the beam sweeping resources.

In some embodiments of the present application, the processor 3500 is configured to read the program in the memory 3520 to implement the following steps:
acquiring a beam switching capability indication according to the configured or pre-configured information;
determining that the beam sweeping resource group is of the first type when the beam switching capability indication indicates that the first terminal does not support beam switching within a single slot; and
determining that the beam sweeping resource group is of the second type when the beam switching capability indication indicates that the first terminal supports beam switching within a single slot.

In some embodiments of the present application, the processor 3500 is configured to read the program in the memory 3520 to implement the following steps:
receiving the beam sweeping channel by using a fifth method or a sixth method in a case where the beam sweeping resource group is of the first type; and
receiving the beam sweeping channel by using a seventh method or an eighth method in a case where the beam sweeping resource group is of the second type.

The fifth method includes: dividing the beam sweeping resources across every M consecutive slots into one resource subset, and on the beam sweeping resources within each resource subset, receiving the beam sweeping channel using the same beam direction.

The sixth method includes: dividing the beam sweeping resources across every N consecutive slots into one resource subset, and on the beam sweeping resources within each resource subset, receiving the beam sweeping channel using different beam directions.

The seventh method includes: dividing every M consecutive beam sweeping resources in the time domain into one resource subset, and on the beam sweeping resources within each resource subset, receiving the beam sweeping channel using the same beam direction.

The eighth method includes: dividing every N consecutive beam sweeping resources in the time domain into one resource subset, and on the beam sweeping resources within each resource subset, receiving the beam sweeping channel using different beam directions.

In some embodiments of the present application, the processor 3500 is configured to read the program in the memory 3520 to implement the following steps:
in the fifth method or the seventh method, if the number of beam directions supported by the second terminal is greater than or equal to N, the N beam directions supported by the second terminal are in one-to-one correspondence with N resource subsets;
in the fifth method or the seventh method, if the number of beam directions supported by the second terminal is less than N, each beam direction supported by the second terminal corresponds to at least one of the N resource subsets;
in the sixth method, if the number of beam directions supported by the second terminal is greater than or equal to N, the N beam directions supported by the second terminal are in one-to-one correspondence with the beam sweeping resources across the N consecutive slots;
in the sixth method, if the number of beam directions supported by the second terminal is less than N, each beam direction supported by the second terminal corresponds to at least one of the beam sweeping resources across the N consecutive slots;
in the eighth method, if the number of beam directions supported by the second terminal is greater than or equal to N, the N beam directions supported by the second terminal are in one-to-one correspondence with the N consecutive beam sweeping resources; and
in the eighth method, if the number of beam directions supported by the second terminal is less than N, each beam direction supported by the second terminal corresponds to at least one of the N consecutive beam sweeping resources.

In some embodiments of the present application, the processor 3500 is configured to read the program in the memory 3520 to implement the following steps:
acquiring a beam sweeping method indication according to the configured or pre-configured information;
receiving the beam sweeping channel by using the fifth method in a case where the beam sweeping resource group is of the first type and the beam sweeping method indication indicates transmitting beam sweeping; and
receiving the beam sweeping channel by using the sixth method in a case where the beam sweeping resource group is of the first type and the beam sweeping method indication indicates receiving beam sweeping.

In some embodiments of the present application, the processor 3500 is configured to read the program in the memory 3520 to implement the following steps:
acquiring a beam sweeping method indication according to the configured or pre-configured information;
receiving the beam sweeping channel by using the seventh method in a case where the beam sweeping resource group is of the second type and the beam sweeping method indication indicates transmitting beam sweeping; and
receiving the beam sweeping channel by using the eighth method in a case where the beam sweeping resource group is of the second type and the beam sweeping method indication indicates receiving beam sweeping.

In some embodiments of the present application, the processor 3500 is configured to read the program in the memory 3520 to implement the following steps:
sending a beam measurement report on a PSFCH corresponding to a target beam sweeping resource in a target beam sweeping resource group when the beam sweeping channel sent by the first terminal is received on the target beam sweeping resource group, where the beam measurement report is obtained according to beam measurements performed upon receiving the beam sweeping channel.

The target beam sweeping resource satisfies at least one of the following conditions:
an RSRP measurement value of the beam sweeping channel received on the target beam sweeping resource is a maximum RSRP among beam sweeping channels received in the beam sweeping resource group; and
the RSRP measurement value of the beam sweeping channel received on the target beam sweeping resource is greater than a second threshold value.

In some embodiments of the present application, the processor 3500 is configured to read the program in the memory 3520 to implement the following steps:
sending the beam measurement report using a second beam on the PSFCH corresponding to the target beam sweeping resource,
where the second beam includes a beam used to receive the beam sweeping channel on the target beam sweeping resource.

Every M consecutive beam sweeping resources within the beam sweeping resource group are divided into one resource subset, and the beam sweeping resource in each resource subset corresponds to one PSFCH time-domain resource. Alternatively, every N consecutive beam sweeping resources within the beam sweeping resource group are divided into one resource subset, with one PSFCH time-domain resource corresponding to one beam sweeping resource in each resource subset.

In some embodiments of the present application, a slot position where the PSFCH is located is related to a configured offset value of the PSFCH and M.

Those skilled in the art should understand that all or some of the steps in the above-mentioned embodiments may be completed through hardware, or may also be completed by a computer program instructing relevant hardware. The computer program includes instructions for performing some or all of the steps of the above-mentioned methods. Moreover, the computer program may be stored in a readable storage medium, and the storage medium may be any form of storage medium.

Additionally, embodiments of the present application further provide a computer-readable storage medium, having a computer program stored therein. The program, when executed by a processor, causes steps of the method according to Embodiment 1 or Embodiment 2 to be implemented. The same technical effects can be achieved. To avoid repetition, detailed descriptions are omitted.

Further, it should be noted that, in the apparatus and the method of the present application, apparently, the components or steps may be decomposed and/or recombined. These decompositions and/or recombinations should be regarded as equivalent solutions of the present application. Moreover, the steps of performing the above-mentioned series of processes may be naturally performed in a chronological order as described, but are not required to be strictly performed in the chronological order, and some steps may be performed in parallel or independently of one another. Those of ordinary skill in the art should understand that all or any steps or components of the method and the apparatus in the present application may be implemented in hardware, firmware, software, or a combination thereof, on any computing apparatus (including a processor, a storage medium, etc.) or a network of the computing apparatus, which can be implemented by those of ordinary skill in the art applying basic programming skills after reading the descriptions of the present application.

Accordingly, the objective of the present application may also be achieved by running a program or a set of programs on any computing apparatus. The computing apparatus may be a well-known general-purpose apparatus. Therefore, the objective of the present application may also be achieved solely by providing a program product containing program code that implements the described method or apparatus. In other words, such a program product also constitutes the present application, and a storage medium storing such a program product also constitutes the present application. Apparently, the storage medium may be any known storage medium or any storage medium developed in the future. It should also be noted that, in the apparatus and the method of the present application, apparently, the components or steps may be decomposed and/or recombined. These decompositions and/or recombinations should be regarded as equivalent solutions of the present application. Moreover, the steps of performing the above-mentioned series of processes may be naturally performed in a chronological order as described, but are not required to be strictly performed in the chronological order. Some steps may be performed in parallel or independently of each other.

The above-mentioned contents are optional implementations of the present application. It should be noted that a plurality of improvements and modifications may also be made by those of ordinary skill in the art without departing from the principle of the present application, and these improvements and modifications should also be considered within the scope of protection of the present application.

## Claims

1. A method for beam sweeping, applied to a first terminal, comprising:
selecting a target beam sweeping resource group from a first resource pool according to configured or pre-configured information, wherein the number of beam sweeping resources included in the target beam sweeping resource group is related to M and N, M is the configured or pre-configured number of transmitting beam directions, and N is the configured or pre-configured number of receiving beam directions; and
sending a beam sweeping channel on the target beam sweeping resource group.

2. The method for beam sweeping as claimed in claim 1, wherein the beam sweeping channel comprises:
a physical sidelink control channel and a reference signal; or
a physical sidelink control channel, a reference signal, and a physical sidelink shared channel.

3. The method for beam sweeping as claimed in claim 2, wherein the physical sidelink control channel and/or the physical sidelink shared channel are used to carry at least one of the following information:
a source identifier;
a destination identifier;
application service information;
application ID;
beam sweeping resource group ID;
beam ID;
time-frequency indication information;
reference signal indication information;
beam measurement assistance information.

4. The method for beam sweeping as claimed in claim 1, wherein the configured or pre-configured information comprises at least one of the following:
time-domain configuration information of the beam sweeping resources;
frequency-domain configuration information of the beam sweeping resources;
a reservation period of the beam sweeping resources;
sequence ID information and sequence type information of a reference signal of the beam sweeping channel;
the number M of transmitting beam directions;
the number N of receiving beam directions;
a beam sweeping resource group ID set;
a time-domain offset value of the beam sweeping resource group;
a beam sweeping method indication;
a beam switching capability indication;
a configuration period of a physical sidelink feedback channel, PSFCH;
a configured offset value of the PSFCH;
frequency-domain configuration information of the first resource pool;
time-domain configuration information of the first resource pool.

5. The method for beam sweeping as claimed in claim 1, further comprising:
determining a type of the beam sweeping resource group included in the first resource pool according to the configured or pre-configured information, wherein
the type of the beam sweeping resource group is a first type or a second type;
according to the first type, the beam sweeping resource group comprises M×N slots, and only one beam sweeping resource is contained within a single slot in the time domain; and
according to the second type, the beam sweeping resource group comprises X slots, and a single slot in the time domain comprises m beam sweeping resources, wherein X=ceil (M×N/m), and m is determined according to the time-domain configuration information of the beam sweeping resources.

6. The method for beam sweeping as claimed in claim 5, wherein the determining the type of the beam sweeping resource group included in the first resource pool according to the configured or pre-configured information comprises:
acquiring a beam switching capability indication according to the configured or pre-configured information;
determining that the beam sweeping resource group included in the first resource pool is of the first type when the beam switching capability indication indicates that the first terminal does not support beam switching within a single slot; and
determining that the beam sweeping resource group included in the first resource pool is of the second type when the beam switching capability indication indicates that the first terminal supports beam switching within a single slot.

7. The method for beam sweeping as claimed in claim 5, wherein the sending the beam sweeping channel on the target beam sweeping resource group comprises:
sending the beam sweeping channel by using a first method or a second method in a case where the target beam sweeping resource group is of the first type; and
sending the beam sweeping channel by using a third method or a fourth method in a case where the target beam sweeping resource group is of the second type,
wherein the first method comprises: dividing the beam sweeping resources across every M consecutive slots into one resource subset, and on the beam sweeping resources within each resource subset, sending the beam sweeping channel using different beam directions;
the second method comprises: dividing the beam sweeping resources across every N consecutive slots into one resource subset, and on the beam sweeping resources within each resource subset, sending the beam sweeping channel using the same beam direction;
the third method comprises: dividing every M consecutive beam sweeping resources in the time domain into one resource subset, and on the beam sweeping resources within each resource subset, sending the beam sweeping channel using different beam directions, or sending the reference signal in the beam sweeping channel using different beam directions; and
the fourth method comprises: dividing every N consecutive beam sweeping resources in the time domain into one resource subset, and on the beam sweeping resources within each resource subset, sending the beam sweeping channel using the same beam direction, or sending the reference signal in the beam sweeping channel using the same beam direction.

8. The method for beam sweeping as claimed in claim 7, further comprising:
when the beam sweeping channel is sent by using the third method, and on the beam sweeping resources within each resource subset, the reference signal in the beam sweeping channel is sent by using different beam directions, within a single slot, beams for sending a physical sidelink control channel of the beam sweeping channel comprise the beam directions for sending the reference signal in the beam sweeping channel within the slot; and
when the beam sweeping channel is sent by using the fourth method, and on the beam sweeping resources within each resource subset, the reference signal in the beam sweeping channel is sent by using the same beam direction, within a single slot, the beams for sending the physical sidelink control channel of the beam sweeping channel comprise the beam direction for sending the reference signal in the beam sweeping channel within the slot.

9. The method for beam sweeping as claimed in claim 7, further comprising:
in the first method, if the number of beam directions supported by the first terminal is greater than or equal to M, the M beam directions supported by the first terminal are in one-to-one correspondence with the beam sweeping resources across the M consecutive slots;
in the first method, if the number of beam directions supported by the first terminal is less than M, each beam direction supported by the first terminal corresponds to at least one of the beam sweeping resources across the M consecutive slots;
in the third method, if the number of beam directions supported by the first terminal is greater than or equal to M, the M beam directions supported by the first terminal are in one-to-one correspondence with the M consecutive beam sweeping resources;
in the third method, if the number of beam directions supported by the first terminal is less than M, each beam direction supported by the first terminal corresponds to at least one of the M consecutive beam sweeping resources;
in the second method or the fourth method, if the number of beam directions supported by the first terminal is greater than or equal to M, different beam directions are used among different resource subsets; and
in the second method or the fourth method, if the number of beam directions supported by the first terminal is less than M, the number of the beam directions supported by the first terminal is traversed and utilized across at least different resource subsets.

10. The method for beam sweeping as claimed in claim 7, wherein the sending the beam sweeping channel by using the first method or the second method in the case where the target beam sweeping resource group is of the first type comprises:
acquiring a beam sweeping method indication according to the configured or pre-configured information;
sending the beam sweeping channel by using the first method in a case where the target beam sweeping resource group is of the first type and the beam sweeping method indication indicates transmitting beam sweeping; and
sending the beam sweeping channel by using the second method in a case where the target beam sweeping resource group is of the first type and the beam sweeping method indication indicates receiving beam sweeping.

11. The method for beam sweeping as claimed in claim 7, wherein the sending the beam sweeping channel by using the third method or the fourth method in the case where the target beam sweeping resource group is of the second type comprises:
acquiring a beam sweeping method indication according to the configured or pre-configured information;
sending the beam sweeping channel by using the third method in a case where the target beam sweeping resource group is of the second type and the beam sweeping method indication indicates transmitting beam sweeping; and
sending the beam sweeping channel by using the fourth method in a case where the target beam sweeping resource group is of the second type and the beam sweeping method indication indicates receiving beam sweeping.

12. The method for beam sweeping as claimed in claim 1, wherein the selecting the target beam sweeping resource group from the first resource pool according to the configured or pre-configured information comprises:
excluding a first beam sweeping resource group from a candidate beam sweeping resource group set included in the first resource pool according to the configured or pre-configured information and sensing information, to obtain an available candidate beam sweeping resource group set; and
selecting the target beam sweeping resource group according to the available candidate beam sweeping resource group set.

13. The method for beam sweeping as claimed in claim 12, wherein the sensing information comprises at least one of the following:
frequency-domain information of beam sweeping resources occupied by a third terminal;
time-domain information of the beam sweeping resources occupied by the third terminal;
a transmission priority value of a beam sweeping channel sent by the third terminal;
an ID of beam sweeping resource group occupied by the third terminal;
a reservation period of the beam sweeping resources of the third terminal;
a reference signal received power, RSRP, measurement value of a reference signal sent by the third terminal.

14. The method for beam sweeping as claimed in claim 12, wherein the first beam sweeping resource group satisfies the following conditions:
the first beam sweeping resource group or a periodically reserved resource group associated with the first beam sweeping resource group overlaps with a second beam sweeping resource group; and the second beam sweeping resource group comprises: a beam sweeping resource group occupied by the third terminal or a periodically reserved resource group associated with the beam sweeping resource group occupied by the third terminal,
wherein the third terminal satisfies at least one of the following conditions:
the highest RSRP measurement value among RSRP measurement values of reference signals sent by the third terminal within the occupied beam sweeping resource group is higher than a first threshold value; and
the transmission priority value of the beam sweeping channel sent by the third terminal is higher than the transmission priority value of the beam sweeping channel of the first terminal.

15. The method for beam sweeping as claimed in claim 1, wherein after sending the beam sweeping channel on the target beam sweeping resource group, the method further comprises:
receiving, on a physical sidelink feedback channel, PSFCH, time-domain resource corresponding to the beam sweeping resource within the target beam sweeping resource group, a beam measurement report sent by a second terminal through a first beam,
wherein every N consecutive beam sweeping resources within the target beam sweeping resource group are divided into one resource subset, the beam sweeping resource in each resource subset corresponds to one PSFCH time-domain resource, and the first beam refers to a beam used to send the beam sweeping channel on the beam sweeping resource corresponding to the PSFCH time-domain resource;
or, every M consecutive beam sweeping resources within the target beam sweeping resource group are divided into one resource subset, with one PSFCH time-domain resource corresponding to one beam sweeping resource in each resource subset, and the first beam comprises a beam used to send the beam sweeping channel on the beam sweeping resource corresponding to the PSFCH time-domain resource.

16. The method for beam sweeping as claimed in claim 15, wherein
a slot position where the PSFCH is located is related to a configured offset value of the PSFCH and M.

17. A method for beam sweeping, applied to a second terminal, comprising:
determining a type of a beam sweeping resource group from a first resource pool according to configured or pre-configured information, wherein the number of beam sweeping resources included in the beam sweeping resource group is related to M and N, M is the configured or pre-configured number of transmitting beam directions, and N is the configured or pre-configured number of receiving beam directions; and
receiving a beam sweeping channel sent by a first terminal according to the type of the beam sweeping resource group.

18. The method for beam sweeping as claimed in claim 17, wherein the configured or pre-configured information comprises at least one of the following:
time-domain configuration information of the beam sweeping resources;
frequency-domain configuration information of the beam sweeping resources;
a reservation period of the beam sweeping resources;
sequence ID information and sequence type information of a reference signal of the beam sweeping channel;
the number M of transmitting beam directions;
the number N of receiving beam directions;
a beam sweeping resource group ID set;
a time-domain offset value of the beam sweeping resource group;
a beam sweeping method indication;
a beam switching capability indication;
a configuration period of a physical sidelink feedback channel, PSFCH;
a configured offset value of the PSFCH;
frequency-domain configuration information of the first resource pool;
time-domain configuration information of the first resource pool.

19. The method for beam sweeping as claimed in claim 17, wherein the beam sweeping resource group is one of the following types:
a first type, wherein according to the first type, the beam sweeping resource group comprises M×N slots, and only one beam sweeping resource is contained within a single slot in the time domain;
a second type, wherein according to the second type, the beam sweeping resource group comprises X slots, and a single slot in the time domain comprises m beam sweeping resources, X=ceil (M×N/m), and m is determined according to the time-domain configuration information of the beam sweeping resources.

20. The method for beam sweeping according to claim 19, wherein determining the type of the beam sweeping resource group from the first resource pool according to the configured or pre-configured information comprises:
acquiring a beam switching capability indication according to the configured or pre-configured information;
determining that the beam sweeping resource group is of the first type when the beam switching capability indication indicates that the first terminal does not support beam switching within a single slot; and
determining that the beam sweeping resource group is of the second type when the beam switching capability indication indicates that the first terminal supports beam switching within a single slot.

21. The method for beam sweeping as claimed in claim 19, wherein receiving the beam sweeping channel sent by the first terminal according to the type of the beam sweeping resource group comprises:
receiving the beam sweeping channel by using a fifth method or a sixth method in a case where the beam sweeping resource group is of the first type; and
receiving the beam sweeping channel by using a seventh method or an eighth method in a case where the beam sweeping resource group is of the second type,
wherein the fifth method comprises: dividing the beam sweeping resources across every M consecutive slots into one resource subset, and on the beam sweeping resources within each resource subset, receiving the beam sweeping channel using the same beam direction;
the sixth method comprises: dividing the beam sweeping resources across every N consecutive slots into one resource subset, and on the beam sweeping resources within each resource subset, receiving the beam sweeping channel using different beam directions;
the seventh method comprises: dividing every M consecutive beam sweeping resources in the time domain into one resource subset, and on the beam sweeping resources within each resource subset, receiving the beam sweeping channel using the same beam direction; and
the eighth method comprises: dividing every N consecutive beam sweeping resources in the time domain into one resource subset, and on the beam sweeping resources within each resource subset, receiving the beam sweeping channel using different beam directions.

22. The method for beam sweeping as claimed in claim 21, further comprising:
in the fifth method or the seventh method, if the number of beam directions supported by the second terminal is greater than or equal to N, the N beam directions supported by the second terminal are in one-to-one correspondence with N resource subsets;
in the fifth method or the seventh method, if the number of beam directions supported by the second terminal is less than N, each beam direction supported by the second terminal corresponds to at least one of the N resource subsets;
in the sixth method, if the number of beam directions supported by the second terminal is greater than or equal to N, the N beam directions supported by the second terminal are in one-to-one correspondence with the beam sweeping resources across the N consecutive slots;
in the sixth method, if the number of beam directions supported by the second terminal is less than N, each beam direction supported by the second terminal corresponds to at least one of the beam sweeping resources across the N consecutive slots;
in the eighth method, if the number of beam directions supported by the second terminal is greater than or equal to N, the N beam directions supported by the second terminal are in one-to-one correspondence with the N consecutive beam sweeping resources; and
in the eighth method, if the number of beam directions supported by the second terminal is less than N, each beam direction supported by the second terminal corresponds to at least one of the N consecutive beam sweeping resources.

23. The method for beam sweeping as claimed in claim 21, wherein receiving the beam sweeping channel by using the fifth method or the sixth method in the case where the beam sweeping resource group is of the first type comprises:
acquiring a beam sweeping method indication according to the configured or pre-configured information;
receiving the beam sweeping channel by using the fifth method in a case where the beam sweeping resource group is of the first type and the beam sweeping method indication indicates transmitting beam sweeping; and
receiving the beam sweeping channel by using the sixth method in a case where the beam sweeping resource group is of the first type and the beam sweeping method indication indicates receiving beam sweeping.

24. The method for beam sweeping as claimed in claim 21, wherein receiving the beam sweeping channel by using the seventh method or the eighth method in the case where the beam sweeping resource group is of the second type comprises:
acquiring a beam sweeping method indication according to configured or pre-configured information;
receiving the beam sweeping channel by using the seventh method in a case where the beam sweeping resource group is of the second type and the beam sweeping method indication indicates transmitting beam sweeping; and
receiving the beam sweeping channel by using the eighth method in a case where the beam sweeping resource group is of the second type and the beam sweeping method indication indicates receiving beam sweeping.

25. The method for beam sweeping as claimed in claim 17, further comprising:
sending a beam measurement report on a PSFCH corresponding to a target beam sweeping resource in a target beam sweeping resource group when the beam sweeping channel sent by the first terminal is received on the target beam sweeping resource group, the beam measurement report is obtained according to beam measurements performed upon receiving the beam sweeping channel,
wherein the target beam sweeping resource satisfies at least one of the following conditions:
an RSRP measurement value of the beam sweeping channel received on the target beam sweeping resource is a maximum RSRP among beam sweeping channels received in the beam sweeping resource group; and
the RSRP measurement value of the beam sweeping channel received on the target beam sweeping resource is greater than a second threshold value.

26. The method for beam sweeping as claimed in claim 25, wherein sending the beam measurement report on the PSFCH corresponding to the target beam sweeping resource in the target beam sweeping resource group comprises:
sending the beam measurement report using a second beam on the PSFCH corresponding to the target beam sweeping resource,
wherein the second beam comprises a beam used to receive the beam sweeping channel on the target beam sweeping resource; and
every M consecutive beam sweeping resources within the beam sweeping resource group are divided into one resource subset, and the beam sweeping resource in each resource subset corresponds to one PSFCH time-domain resource; alternatively, every N consecutive beam sweeping resources within the beam sweeping resource group are divided into one resource subset, with one PSFCH time-domain resource corresponding to one beam sweeping resource in each resource subset.

27. The method for beam sweeping as claimed in claim 25, wherein
a slot position where the PSFCH is located is related to a configured offset value of the PSFCH and M.

28. A first terminal, comprising a transceiver, a memory, a processor, and a computer program stored on the memory and runnable on the processor, wherein the processor, when executing the computer program, implements the steps of the method for beam sweeping as claimed in any one of claims 1 to 16.

29. A second terminal, comprising a transceiver, a memory, a processor, and a computer program stored on the memory and runnable on the processor, wherein the processor, when executing the computer program, implements the steps of the method for beam sweeping as claimed in any one of claims 17 to 27.

30. An apparatus for beam sweeping, applied to a first terminal, comprising:
a resource selection component, configured to select a target beam sweeping resource group from a first resource pool according to configured or pre-configured information, wherein the number of beam sweeping resources included in the target beam sweeping resource group is related to M and N, M is the configured or pre-configured number of transmitting beam directions, and N is the configured or pre-configured number of receiving beam directions; and
a first sending component, configured to send a beam sweeping channel on the target beam sweeping resource group.

31. An apparatus for beam sweeping, applied to a second terminal, comprising:
a first determination component, configured to determine a type of a beam sweeping resource group from a first resource pool according to configured or pre-configured information, wherein the number of beam sweeping resources included in the beam sweeping resource group is related to M and N, M is the configured or pre-configured number of transmitting beam directions, and N is the configured or pre-configured number of receiving beam directions; and
a second receiving component, configured to receive a beam sweeping channel sent by a first terminal according to the type of the beam sweeping resource group.

32. A computer-readable storage medium, having a computer program stored therein, wherein the computer program, when executed by a processor, causes the steps of the method for beam sweeping as claimed in any one of claims 1 to 16 or the steps of the method for beam sweeping as claimed in any one of claims 17 to 27 to be implemented.
